# EUROPÄISCHE PATENTSCHRIFT

(11) **EP 1 521 626 B1**
(45) Veröffentlichungstag und Bekanntmachung des Hinweises auf die Patenterteilung: **16.11.2005**
(21) Anmeldenummer: 03704603.4
(22) Anmeldetag: 13.02.2003
(51) Int. Cl.: B01D 35/31, F01M 11/03

(54) **VORRICHTUNG ZUM ABTRENNEN VON VERUNREINIGUNGEN AUS DEM SCHMIERÖL EINER BRENNKRAFTMASCHINE**
DEVICE FOR SEPARATING IMPURITIES FROM THE LUBRICATING OIL OF AN INTERNAL COMBUSTION ENGINE
DISPOSITIF POUR SEPARER DES IMPURETES CONTENUES DANS L'HUILE LUBRIFIANTE D'UN MOTEUR A COMBUSTION INTERNE

(30) Priorität: 12.07.2002 DE 20211556 U
(43) Veröffentlichungstag der Anmeldung: 13.04.2005
(73) Patentinhaber: Hengst GmbH & Co. KG, 48147 Münster (DE)
(72) Erfinder: BAUMANN, Dieter, 48268 Greven (DE)
(74) Vertreter: Linnemann, Winfried
(86) Internationale Anmeldenummer: PCT/EP2003/001412
(87) Internationale Veröffentlichungsnummer: WO 2004/007052

(56) Entgegenhaltungen:
- WO-A-90/02597
- DE-A- 19 523 239
- DE-C- 4 306 431
- DE-U- 29 610 290

## Beschreibung

Die vorliegende Erfindung betrifft eine Vorrichtung zum Abtrennen von Verunreinigungen aus dem Schmieröl einer Brennkraftmaschine, wobei die Vorrichtung einen Filtereinsatz aufweist, wobei der Filtereinsatz in einem im Betrieb der Vorrichtung verschlossenen, zweiteiligen Gehäuse mit einem festen, unteren Gehäuseteil und einem abnehmbaren, oberen Schraubdeckel angeordnet ist und wobei der Schraubdeckel und der Filtereinsatz miteinander in Eingriff bringbare, lösbare Verbindungsmittel zur Übertragung axialer Zugkräfte aufweisen, wobei mittels dieser Verbindungsmittel bei einem Losdrehen des Schraubdeckels der Filtereinsatz aus dem Gehäuse heraus mitnehmbar ist.

Weiterhin betrifft die vorliegende Erfindung eine Vorrichtung zum Abtrennen von verunreinigungen aus dem Schmieröl einer Brennkraftmaschine, wobei die Vorrichtung unten einen Filtereinsatz und darüber eine Zentrifuge mit einem mittels durchströmenden Schmieröls antreibbaren Rotor aufweist, wobei der Filtereinsatz und die Zentrifuge übereinander in einem gemeinsamen, im Betrieb der Vorrichtung verschlossenen, zweiteiligen Gehäuse mit einem abnehmbaren oberen Schraubdeckel und einem festen unteren Gehäuseteil angeordnet sind, wobei in dem Gehäuse zwischen Filtereinsatz und Zentrifuge ein herausnehmbarer Zwischendeckel angeordnet ist, wobei der Zwischendeckel und der Filtereinsatz erste miteinander in Eingriff bringbare, lösbare Verbindungsmittel zur Übertragung axialer Zugkräfte aufweisen und wobei aus dem Gehäuse in dessen geöffnetem Zustand die Zentrifuge, der Zwischendeckel und der Filtereinsatz herausnehmbar sind.

Eine Vorrichtung der vorstehend an erster Stelle genannten Art ist beispielsweise aus DE 296 10 290 U1 bekannt. Hier ist eine als Flüssigkeitsfilter ausgeführte Vorrichtung beschrieben, bei der vorgesehen ist, daß die obere Stirnscheibe des Filtereinsatzes mit nach oben vorstehenden, elastisch einfederbaren Rastzungen versehen ist. Diese Rastzungen greifen im zusammengebauten Zustand der Vorrichtung in eine am Innenumfang des Schraubdeckels umlaufende Rastnut ein. Dies erlaubt ein Losdrehen des Schraubdeckels unter Mitnahme des Filtereinsatzes aus dem Filtergehäuse heraus, so daß eine einfache Handhabung bei einem Wechsel des Filtereinsatzes erreicht wird, wobei ein unmittelbares Ergreifen des verschmutzten, mit Öl behafteten Filtereinsatzes nicht nötig ist. Das Trennen eines verbrauchten Filtereinsatzes von dem Schraubdeckel erfolgt üblicherweise so, daß die beiden Teile gegeneinander verkantet werden, bis sich die Rastverbindung löst. Hierzu ist es erforderlich, daß das Verkanten über einen bestimmten Winkel hinaus möglich ist, damit sich die Rastverbindung auch löst. Bei Schraubdeckeln, die nur wenig seitliches Bewegungsspiel für den zum Teil darin liegenden Filtereinsatz bieten, was besonders bei relativ langen Schraubdeckeln der Fall ist, kann die Rastverbindung nicht durch Verkanten gelöst werden, weil der erforderliche Auslenkungswinkel zwischen den beiden Teilen nicht erreicht wird, da vorher der Filtereinsatz an den Innenumfang des Schraubdeckels anstößt. In diesem Fall muß dann mit sehr hohem Kraftaufwand die Rastverbindung durch Ausübung einer Zugkraft in Axialrichtung gelöst werden, wozu der verschmutzte Filtereinsatz erfaßt werden muß und wobei es leicht zu einem Austrag von verschmutztem Schmieröl in die Umgebung kommen kann. Dabei ist es zudem schwierig, an einem öligen Filtereinsatz die erforderliche Zugkraft beim Ergreifen überhaupt auszuüben.

Eine Vorrichtung der vorstehend an zweiter Stelle genannten Art ist aus der DE 43 06 431 C1 bekannt. Wenn bei dieser bekannten Vorrichtung der Schraubdeckel als abnehmbarer Teil des Gehäuses in seiner Losdrehrichtung verdreht wird, bewegt sich zunächst nur der Schraubdeckel in seinem Gewinde vom festen Teil des Gehäuses weg nach oben. Der im oberen Teil des Gehäuses angeordnete Rotor der Zentrifuge behält dabei seine Lage bei. Nach dem Abnehmen des Gehäusedeckels steht der Rotor der Zentrifuge in seinem unteren Lager. Dann kann als nächstes der Zentrifugenrotor abgenommen werden. Danach ist der Zwischendeckel zugänglich. Der Zwischendeckel muß aus dem unteren Teil des Gehäuses nach oben herausgezogen werden. Dabei nimmt der Zwischendeckel den unter ihm angeordneten Filtereinsatz nach oben mit. Diese Mitnahme wird durch die ersten lösbaren Verbindungsmittel zwischen dem Zwischendeckel und der oberen Stirnscheibe des Filtereinsatzes bewirkt. Nach Herausnehmen der Kombination aus Zwischendeckel und Filtereinsatz kann der Filtereinsatz durch Verkanten oder durch Ausüben einer Zugkraft in Axialrichtung aus dem Zwischendeckel ausgerastet und herausgezogen werden und es kann ein frischer Filtereinsatz in den Zwischendeckel eingesteckt und mit diesem über die lösbaren Verbindungsmittel durch Ausüben einer Schubkraft in Axialrichtung verrastet werden. Der Zusammenbau der Vorrichtung erfolgt dann in umgekehrter Reihenfolge wie das Zerlegen, nämlich indem zuerst der Zwischendeckel zusammen mit dem Filtereinsatz in den unteren Teil des Gehäuses eingeführt wird. Danach wird dann der Zentrifugenrotor mit seinem unteren Lager auf den Zwischendeckel aufgesetzt. Als letztes wird der Schraubdeckel aufgeschraubt, wobei darauf zu achten ist, daß das obere Lager des Zentrifugenrotors seine Soll-Position im Zentrum des oberen Endes des Schraubdeckels einnimmt. Die Zerlegung und der Zusammenbau dieser Vorrichtung sind ersichtlich relativ aufwendig und umständlich. Zudem ist es bei der Zerlegung erforderlich, mit Öl behaftete Teile, insbesondere den Zwischendeckel, manuell zu ergreifen. Hierbei ergibt sich neben der Verschmutzung der Hände des Bedienungspersonals das weitere Problem, daß ein ausreichend festes Ergreifen des Zwischendeckels aufgrund seiner öligen Oberfläche schwierig ist. Dadurch ist das Herausziehen des Zwischendeckels gegen die auftretenden Reibungskräfte und gegen ein gegebenenfalls vorliegendes Vakuum aus dem unteren Teil des Gehäuses erschwert.

Für die vorliegende Erfindung stellt sich deshalb die Aufgabe, Vorrichtungen der eingangs genannten Art zu schaffen, die die aufgeführten Nachteile vermeiden und bei denen insbesondere das Zerlegen und das Zusammenbauen einfacher, schneller und sauberer von statten geht.

Eine erste Lösung dieser Aufgabe gelingt erfindungsgemäß mit einer Vorrichtung der eingangs an erster Stelle genannten Art, die dadurch gekennzeichnet ist, daß die Verbindungsmittel durch Verdrehen des Schraubdeckels in seiner Losdrehrichtung in Eingriff miteinander und durch Verdrehen des Schraubdeckels in seiner Festdrehrichtung außer Eingriff bringbare Verbindungsmittel sind.

Vorteilhaft sind bei der erfindungsgemäßen Vorrichtung die Verbindungsmittel durch eine einfache Drehbewegung bedarfsweise in Eingriff und außer Eingriff bringbar. Dabei ist für das Herstellen und für das Lösen des Eingriffs praktisch kein Kraftaufwand erforderlich, wie dies bei einer Rastverbindung der Fall ist, wenn die Rastverbindung hergestellt oder gelöst werden soll. Gleichzeitig ist aber bei der erfindungsgemäßen Vorrichtung gewährleistet, daß bei einem Losdrehen des Schraubdeckels der Filtereinsatz in gewünschter Weise die Bewegung des Schraubdeckels vom übrigen Filtergehäuse weg mitmacht. Dadurch wird auch bei dieser Vorrichtung eine saubere Entnahme des Filtereinsatzes aus dem Filtergehäuse ermöglicht, weil der Filtereinsatz beim Abnehmen des Deckels gleichzeitig aus dem Filtergehäuse mitgenommen wird und vom Bedienungspersonal nicht separat für sich aus dem Filtergehäuse herausgenommen werden muß. Zum Trennen des Filtereinsatzes vom Schraubdeckel genügt wieder eine kleine Drehbewegung, nun in Festdrehrichtung des Schraubdeckels, wodurch der Eingriff der Verbindungsmittel zwischen dem Filtereinsatz und dem Schraubdeckel gelöst wird und der Filtereinsatz vom Schraubdeckel getrennt ist. Danach kann der verbrauchte Filtereinsatz entsorgt und durch einen frischen Filtereinsatz ersetzt werden. Der frische Filtereinsatz kann dann in ebenso einfacher Weise durch eine einfache Drehbewegung mit dem Schraubdeckel über die Verbindungsmittel verbunden werden und dann zusammen mit dem Schraubdeckel in das Filtergehäuse eingesetzt und durch Festdrehen des Schraubdeckels im Filtergehäuse fixiert werden. Diese Art der Verbindungsmittel funktioniert unabhängig von dem Maß eines möglichen seitlichen Bewegungsspiels des Filtereinsatzes innerhalb des Schraubdekkels, da für das Herstellen und Lösen des Eingriffs zwischen den Verbindungsmitteln keine seitliche Bewegung benötigt wird, sondern lediglich eine Verdrehung relativ zueinander. Damit ist diese Art von Verbindungsmitteln besonders vorteilhaft bei langen Schraubdeckeln einsetzbar, die bei der Verwendung einer bisher üblichen Rastverbindung zu Problemen bei der Lösung der Rastverbindung führten.

Eine erste bevorzugte Weiterbildung der Vorrichtung sieht vor, daß der Drehwinkel, den der Schraubdeckel zwischen der Nichteingriffsstellung und der Eingriffsstellung der Verbindungsmittel zurücklegt, zwischen etwa 15° und 30° beträgt. Mit einem solchen kleinen Drehwinkel genügt für das Herstellen und Lösen des Eingriffs eine sehr kleine, sehr schnell und einfach manuell ausführbare Drehbewegung der die Verbindungsmittel aufweisenden Teile der Vorrichtung relativ zueinander.

Um in der erfindungsgemäßen Vorrichtung auch gängige, schon auf dem Markt eingeführte und vorhandene Filtereinsätze weiter verwenden zu können, schlägt eine weitere Ausgestaltung der Vorrichtung vor, daß die filtereinsatzseitigen Verbindungsmittel durch einen an einer oberen Stirnscheibe des Filtereinsatzes ohnehin vorhandenen konzentrischen Kranz von Schnapphaken gebildet sind und daß die zugehörigen Verbindungsmittel des Schraubdeckels durch einen an der Unterseite von dessen oberem Teil konzentrisch angeordneten Ring mit Nockensegmenten gebildet sind, wobei in einer ersten, durch Verdrehen des Schraubdeckels in seiner Festdrehrichtung einstellbaren Verdrehstellung relativ zueinander der Kranz von Schnapphaken axial in den Ring und aus dem Ring mit den Nockensegmenten bewegbar ist und wobei in einer zweiten, durch Verdrehen des Schraubdeckels in Losdrehrichtung einstellbaren Verdrehstellung relativ zueinander der in den Ring bewegte Kranz von Schnapphaken axial nicht aus dem Ring mit den Nockensegmenten heraus bewegbar ist. Bei dieser Ausgestaltung der Vorrichtung muß lediglich an der Innenseite des Schraubdeckels eine Änderung erfolgen, wonach dann auf erfindungsgemäße Art und Weise die Verbindung zwischen dem Schraubdeckel einerseits und dem Filtereinsatz andererseits herstellbar und lösbar ist. Auf der Seite des Filtereinsatzes sind keine Änderungen im Vergleich zu bisher schon üblichen Filtereinsätzen nötig, so daß eine Umstellung auf die neue Art der Verbindung mit einem sehr geringen technischen Aufwand durchführbar ist.

Um den Schraubdeckel des Gehäuses möglichst einfach mit seinen Verbindungsmitteln ausstatten zu können, ist in weiterer Ausgestaltung der Vorrichtung vorgesehen, daß der Ring mit den Nockensegmenten als separates Bauteil verdrehfest und verliersicher in eine Ausnehmung des Schraubdeckels eingesetzt ist. Der Deckel kann damit zunächst mit einer relativ einfachen Formgebung im Bereich seiner Ausnehmung hergestellt werden. Anschließend wird dann in diese Ausnehmung der Ring eingebaut, wobei hier eine gegenseitige Verschweißung oder Verklebung oder Verrastung möglich ist, um die beiden Teile verdrehfest und verliersicher miteinander zu verbinden.

Eine zweite Lösung dieser Aufgabe gelingt erfindungsgemäß mit einer Vorrichtung der eingangs an zweiter Stelle genannten Art, die dadurch gekennzeichnet ist,
- daß zusätzlich der Schraubdeckel und der Zwischendeckel zweite miteinander in Eingriff bringbare, lösbare Verbindungsmittel zur Übertragung axialer Zugkräfte aufweisen,
- daß die zweiten Verbindungsmittel durch Verdrehen des Schraubdeckels in seiner Losdrehrichtung relativ zum Zwischendeckel in Eingriff und durch Verdrehen des Schraubdeckels in seiner Festdrehrichtung relativ zum Zwischendeckel außer Eingriff bringbar sind und
- daß die ersten Verbindungsmittel durch Verdrehen des Schraubdeckels in dessen Losdrehrichtung unter Mitnahme des Zwischendeckels relativ zum Filtereinsatz in Eingriff und durch Verdrehen des Zwischendeckels in entgegengesetzter Richtung relativ zum Filtereinsatz außer Eingriff bringbar sind.

Vorteilhaft wird der Eingriff zur Übertragung von in Axialrichtung wirkenden Zugkräften nur dann hergestellt, wenn er tatsächlich benötigt wird, nämlich beim Zerlegen der Vorrichtung. Dieser Eingriff wird einfach dadurch erzeugt, daß der Schraubdeckel in Losdrehrichtung verdreht wird, was für das Abschrauben des Schraubdeckels vom festen Teil des Gehäuses ohnehin erforderlich ist. Durch die Drehbewegung des Schraubdeckels in seiner Losdrehrichtung werden sowohl die ersten als auch die zweiten Verbindungsmittel in Eingriff miteinander gebracht. Am Ende des Abschraubvorganges des Schraubdeckels vom festen Teil des Gehäuses besteht also ein Eingriff zwischen dem Schraubdeckel und dem Zwischendeckel sowie zwischen dem Zwischendeckel und dem Filtereinsatz. Damit genügt es für das Bedienungspersonal, lediglich den außen in der Regel sauberen Schraubdeckel zu ergreifen; ein Ergreifen der mit Öl behafteten weiteren Teile der Vorrichtung, die aus dem Gehäuse entnommen werden, ist für das Herausziehen nicht erforderlich. Vielmehr nimmt der Schraubdeckel bei seiner Bewegung nach oben den Zentrifugenrotor, den Zwischendeckel und den Filtereinsatz in der gleichen Bewegungsrichtung mit nach oben. Die aus dem Gehäuse entnommene Einheit von Schraubdeckel, Zentrifugenrotor, Zwischendeckel und Filtereinsatz kann dann auf einfache Art und Weise durch Verdrehung relativ zueinander in entgegengesetzter Drehrichtung getrennt werden, da durch diese nun entgegengesetzte Verdrehung der Eingriff zwischen den Verbindungsmitteln sowohl zwischen dem Schraubdeckel und dem Zwischendeckel als auch zwischen dem Zwischendeckel und dem Filtereinsatz aufgehoben wird. Nach der Aufhebung dieses Eingriffs können dann alle vom festen Gehäuseteil abgenommenen Teile der Vorrichtung, nämlich der Filtereinsatz, der Zwischendeckel, der Zentrifugenrotor und der Schraubdeckel voneinander getrennt werden. Nach Ersatz des Filtereinsatzes und des Zentrifugenrotors durch frische Bauteile erfolgt dann der Zusammenbau in umgekehrter Reihenfolge und mit umgekehrten Drehrichtungen. Danach liegt dann eine frische, vormontierte Einheit aus Schraubdeckel, Zentrifugenrotor, Zwischendeckel und Filtereinsatz vor, die als Einheit in den unteren Teil des Gehäuses eingesetzt und durch Verdrehen des Schraubdekkels mit dem übrigen Gehäuse verbunden werden kann. Die Verdrehung des Schraubdeckels in seiner Festdrehrichtung sorgt für eine Aufhebung der zuvor hergestellten Verbindungseingriffe, da diese während des Festschraubens des Schraubdeckels und im festgeschraubten Zustand des Schraubdeckels nicht benötigt werden.

In weiterer Ausgestaltung der zweiten Vorrichtung gemäß Erfindung ist bevorzugt vorgesehen, daß der Drehwinkel, den der Schraubdeckel relativ zum Filtereinsatz zwischen der Nichteingriffsstellung und der Eingriffsstellung der ersten und der zweiten Verbindungsmittel zurücklegt, insgesamt zwischen etwa 45° und 120° beträgt. Durch diesen trotz zweier herzustellender oder zu lösender Verbindungseingriffe relativ kleinen Drehwinkel werden die Eingriffe beim Losdrehen des Schraubdeckels zügig und auf kurzem Wege hergestellt und beim Festdrehen des Schraubdeckels ebenso zügig und auf kurzem Wege wieder aufgehoben.

In einer konkreteren Weiterbildung der zweiten Vorrichtung ist vorgesehen, daß der Zwischendeckel Glockenform hat und auf seinem Außenumfang axial verlaufende Rippen aufweist, die jeweils mit mindestens einer in Umfangsrichtung weisenden Verbreiterung oder Durchbrechung ausgebildet sind, und daß der Schraubdeckel an seinem unteren Rand in seiner Losdrehrichtung weisende Haken oder Nasen aufweist, die mit den Verbreiterungen oder Durchbrechungen durch Verdrehen des Schraubdeckels in seiner Losdrehrichtung relativ zum Zwischendeckel in Eingriff und durch Verdrehen des Schraubdeckels in seiner Festdrehrichtung relativ zum Zwischendeckel außer Eingriff bringbar sind. Bei dieser Ausgestaltung müssen am Schraubdeckel lediglich über dessen Umfang verteilt an seiner unteren Stirnkante mehrere, z.B. drei, Haken oder Nasen angeformt werden, was bei der Herstellung des Schraubdeckels nur einen sehr geringen zusätzlichen Aufwand erfordert. Auch der auf der Seite des Zwischendekkels zusätzlich erforderliche Aufwand zur Bildung der Verbreiterungen oder Durchbrechungen als mit den Haken oder Nasen zusammenwirkende Verbindungsmittel ist relativ gering, so daß auch für die Herstellung des Zwischendekkels kein merklicher zusätzlicher Aufwand entsteht, der die Vorrichtung verteuern würde.

Eine Weiterbildung der Vorrichtung sieht vor, daß die die Verbreiterungen oder Durchbrechungen aufweisenden Rippen zugleich als Stabilisierungs- und Kraftableitungsrippen zur Versteifung des Zwischendeckels und zur Ableitung von durch einen Öldruck im Inneren des Gehäuses unterhalb des Zwischendeckels hervorgerufenen Kräften auf den Schraubdeckel dienen. Damit erhalten die Rippen zwei Funktionen, wodurch der Material- und Herstellungsaufwand bei Erzielung möglichst vieler Funktionen so gering wie möglich gehalten wird.

Damit bei von dem festen Gehäuseteil abgeschraubtem Schraubdeckel der mit diesem über die Verbindungsmittel, die sich nun in Eingriff befinden, verbundene Zwischendeckel und der damit verbundene Filtereinsatz nicht ungewollt abfallen und dadurch beschädigt werden können, ist vorzugsweise weiter vorgesehen, daß die Verbreiterungen oder Durchbrechungen einerseits und/oder die Haken oder Nasen andererseits an ihren in Eingriff miteinander tretenden Flächen jeweils mit einer die Eingriffsstellung sichernden Schräge oder Stufe ausgebildet sind. Hierdurch wird bewirkt, daß zum Lösen des Verbindungseingriffs mittels Verdrehens der Teile gegeneinander ein gewisser, aber relativ kleiner Bewegungswiderstand überwunden werden muß, der aber in jedem Fall groß genug ist, ein ungewolltes selbsttätiges Lösen der Teile voneinander zu verhindern.

Statt im Bereich der Rippen auf dem Außenumfang des Zwischendeckels können die zweiten Verbindungsmittel auch an anderer Stelle angeordnet sein. Eine bevorzugte weitere Ausgestaltung sieht hierzu vor, daß der Zwischendeckel Glockenform hat und radial außen auf seiner Oberseite mehrere axial nach oben weisende, in Umfangsrichtung voneinander beabstandete Flügel aufweist, die jeweils mit mindestens einer in Umfangsrichtung weisenden Verbreiterung oder Durchbrechung oder einer radial nach innen einspringenden Eintiefung als Verbindungsmittel ausgebildet sind, und daß der Schraubdeckel an seinem unteren Rand in seiner Losdrehrichtung oder radial nach innen weisende Haken oder Nasen als Verbindungsmittel aufweist, die mit den Verbindungsmitteln des Zwischerideckels durch Verdrehen des Schraubdeckels in seiner Losdrehrichtung relativ zum Zwischendeckel in Eingriff und durch Verdrehen des Schraubdeckels in seiner Festdrehrichtung relativ zum Zwischendeckel außer Eingriff bringbar sind. Diese Ausführung ist insbesondere bei Vorrichtungen mit einem kürzeren Schraubdeckel, der sich nicht bis in den Bereich unterhalb des Oberteils des Schraubdeckels erstreckt, vorteilhaft.

Um zu vermeiden, daß beim Festschrauben des Schraubdekkels sich die zweiten Verbindungsmittel in Axialrichtung voreinander legen und verklemmen, ist vorgesehen, daß die zweiten Verbindungsmittel so angeordnet und ausgebildet sind, daß sie bei einem Aufsetzen des Schraubdeckels auf das übrige Gehäuse vor deren Gewindeeingriff einander in Axialrichtung überlappen.

Für eine einfache und schnelle Montage der Vorrichtung ist es zweckmäßig, Teile der Vorrichtung zu vormontierten Baugruppen zusammenfügen zu können. Hierfür ist vorgesehen, daß die Flügel radial außen eine mit Bewegungsspiel in das Innere des Schraubdeckels passende Führungskontur haben. Diese Führungskontur sorgt dafür, daß der Zwischendeckel mit dem von ihm getragenen Zentrifugenrotor in einer exakten axialen Ausrichtung in den Schraubdeckel eingesetzt werden kann, wobei sichergestellt ist, daß ein oberes Wellenende einer Rotorwelle genau in eine Wellenaufnahme im Zentrum der oberen Innenseite des Schraubdekkels gelangt. Auf der anderen Seite des Zwischendeckels kann schon der Filtereinsatz angebracht werden, sodaß dann vorteilhaft die vormontierte Baugruppe alle in das Gehäuse einzubauenden bzw. mit dem Gehäuse zu verbindenden Teile umfaßt.

Unterhalb des Zwischendeckels herrscht im Betrieb der. Vorrichtung ein erheblicher Schmieröldruck, wogegen der Bereich über dem Zwischendeckel drucklos ist. Um die durch die Druckdifferenz hervorgerufenen Kräfte auf den Zwischendeckel aufzunehmen und in den Schraubdeckel abzuleiten, ist vorgesehen, daß an oder neben den Flügeln je eine radial nach außen vorspringende Stufe vorgesehen ist, auf denen im festgeschraubten Zustand des Schraubdeckels dessen Unterkante aufsteht.

Um die Flügel und den Zwischendeckel insgesamt stabiler und belastbarer zu machen, wird vorgeschlagen, daß die Flügel über einen durchgehenden, umlaufenden Kragen miteinander verbunden oder zu einem durchgehenden, umlaufenden Kragen zusammengefaßt sind.

Eine weitere Maßnahme zur Vermeidung eines zusätzlichen Herstellungsaufwands und zur Ermöglichung der Verwendung von gängigen Filtereinsätzen auch bei der zweiten erfindungsgemäßen Vorrichtung besteht darin, daß die filtereinsatzseitigen Verbindungsmittel durch einen an einer oberen Stirnscheibe des Filtereinsatzes ohnehin vorhandenen konzentrischen Kranz von Schnapphaken gebildet sind und daß die zugehörigen Verbindungsmittel des Zwischendeckels durch einen an der Unterseite von dessen oberem Teil konzentrisch angeordneten Ring mit Nockensegmenten gebildet sind, wobei in einer ersten, durch Verdrehen in Festdrehrichtung einstellbaren Verdrehstellung relativ zueinander der Schnapphakenkranz axial in den Ring und aus dem Ring mit den Nockensegmenten bewegbar ist und wobei in einer zweiten, durch Verdrehen in Losdrehrichtung einstellbaren Verdrehstellung relativ zueinander der in den Ring bewegte Schnapphakenkranz axial nicht aus dem Ring mit den Nockensegmenten heraus bewegbar ist. Mit dieser Ausführung der Vorrichtung werden vorteilhaft die an dem Filtereinsatz ohnehin vorhandenen Verbindungsmittel, die üblicherweise zu einer Verrastung mit dem Zwischendeckel oder zur unmittelbaren Verrastung mit dem Schraubdeckel bei einem Filter ohne Zentrifuge dienen, genutzt. Damit wird vermieden, daß ein spezieller Filtereinsatz bereitgestellt werden muß.

Weiter ist bevorzugt vorgesehen, daß der im vorhergehenden Absatz erwähnte Ring mit den Nockensegmenten als separates Bauteil verdrehfest und verliersicher in eine Ausnehmung des Zwischendeckels eingesetzt ist. Auf diese Weise besteht die Möglichkeit, den Ring einerseits und den Zwischendeckel andererseits aus unterschiedlichen Materialien zu fertigen, wobei jeweils ein Material mit für die jeweiligen Aufgaben besonders passenden Eigenschaften ausgewählt werden kann. Auch wird so die Herstellung des Zwischendeckels vereinfacht, da an dessen Unterseite' nur eine Ausnehmung vorgesehen werden muß, in die dann der Ring eingesetzt wird. Wenn der Ring als separates Bauteil hergestellt wird, ist dessen Fertigung insbesondere als Spritzgußteil vereinfacht, da hinsichtlich der Entformung keine Einschränkungen durch Teile des Zwischendeckels bestehen.

Um die an den erfindungsgemäßen Vorrichtungen vorgesehenen Verbindungsmittel selbst sowie den Eingriff dieser Verbindungsmittel miteinander mit möglichst geringem Aufwand herstellen und aufheben zu können, sind die Verbindungsmittel bevorzugt bajonettverschlußartig oder als Kurzgewinde ausgeführt.

Weiter ist für die Vorrichtung bevorzugt vorgesehen, daß der Schraubdeckel, die obere Stirnscheibe des Filtereinsatzes sowie gegebenenfalls der Zwischendeckel und gegebenenfalls der Ring mit den Nockensegmenten jeweils einstückige Spritzgußteile aus Kunststoff sind. Dies erlaubt eine kostengünstige Massenfertigung und ergibt ein geringes Gewicht der Vorrichtung.

Zur weiteren Vereinfachung der Herstellung und Montage der Vorrichtung kann schließlich der Schraubdeckel einschließlich seines Rings mit den Nockensegmenten oder der Zwischendeckel einschließlich seines Rings mit den Nokkensegmenten jeweils ein einstückiges Spritzgußteil aus Kunststoff sein. Hierdurch wird vorteilhaft die Zahl der Einzelteile und die Zahl der Montageschritte verringert.

Im folgenden werden drei Ausführungsbeispiele der Erfindung anhand einer Zeichnung erläutert. Die Figuren der Zeichnung zeigen:
- Figur 1: eine erste Vorrichtung zum Abtrennen von Verunreinigungen aus dem Schmieröl einer Brennkraftmaschine, mit einem Filtereinsatz, in Seitenansicht und teils im Vertikalschnitt, in fest zusammengebautem Zustand,
- Figur 2: die Vorrichtung aus Figur 1 in einem Zustand während eines Verdrehen eines Schraubdeckels der Vorrichtung in Losdrehrichtung, in gleicher Darstellungsweise wie in Figur 1,
- Figur 3: eine zweite Vorrichtung zum Abtrennen von Verunreinigungen aus dem Schmieröl einer Brennkraftmaschine mit einem Filtereinsatz und einer Zentrifuge, in Seitenansicht, teils im Vertikalschnitt und teils in weggebrochener Darstellung, im fest zusammengebauten Zustand,
- Figur 4: die Vorrichtung aus Figur 3 in einer Ansicht schräg von oben in teilweise aufgeschnittener Darstellung und unter Weglassung einzelner Teile der Vorrichtung,
- Figur 5: die Vorrichtung aus Figur 3 in gleicher Darstellungsweise wie in Figur 3, nun aber in einer ersten Verdrehstellung eines Schraubdeckels zu Beginn eines Losdrehens beim Öffnen der Vorrichtung,
- Figur 5a: das in Figur 5 eingekreiste Detail in einer abgeänderten Ausführung,
- Figur 6: die Vorrichtung aus Figur 5 in gleicher Darstellungsweise wie in Figur 4 und im gleichen Verdrehzustand wie in Figur 3,
- Figur 7: die Vorrichtung aus Figur 3 in einem Verdrehzustand des Schraubdeckels nach einem weiteren Verdrehen in Losdrehrichtung, in gleicher Darstellungsweise wie in Figur 3 und in Figur 5, und
- Figur 8: die Vorrichtung aus Figur 7 in gleicher Darstellungsweise wie in den Figuren 4 und 6 im Verdrehzustand gemäß Figur 7.
- Figur 9: eine dritte Vorrichtung zum Abtrennen von Verunreinigungen aus dem Schmieröl einer Brennkraftmaschine mit einem Filtereinsatz und einer Zentrifuge, im Vertikalschnitt, im fest zusammengebauten Zustand,
- Figur 10: die Vorrichtung aus Figur 9 unter Weglassung von Zentrifugenrotor und Filtereinsatz in einer teilweise weggebrochenen perspektivischen Ansicht mit festgedrehtem Schraubdeckel,
- Figur 11: die Vorrichtung aus Figur 9 in gleicher Darstellung wie in Figur 10, nun mit teilweise losgedrehtem Schraubdeckel, und
- Figur 12: die Vorrichtung aus Figur 9 in gleicher Darstellung wie in Figur 10 und 11, nun mit vollständig losgedrehtem Schraubdeckel.

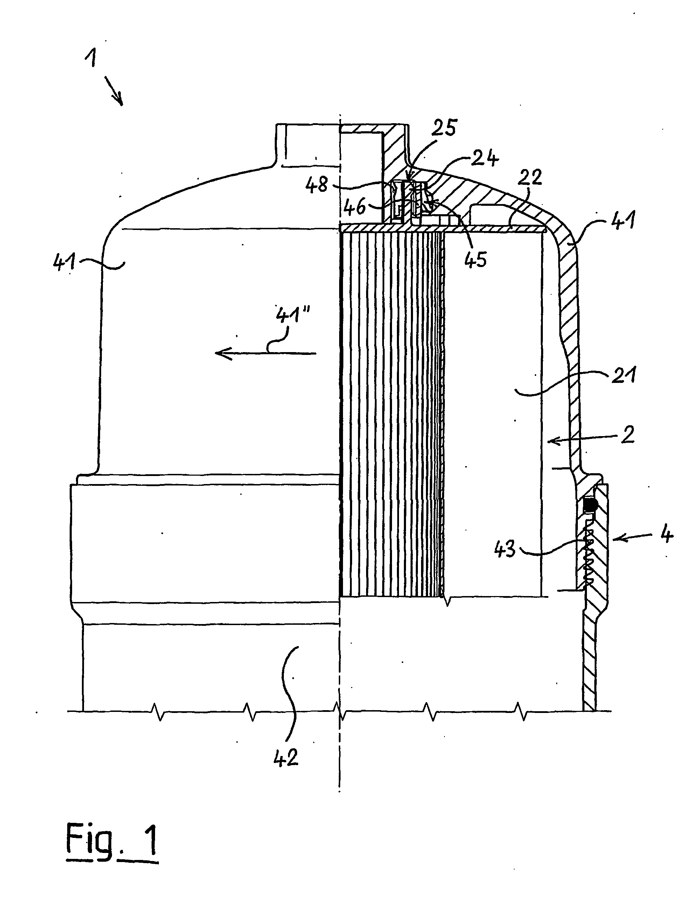

Wie die Figur 1 der Zeichnung zeigt, ist das hier dargestellte erste Ausführungsbeispiel einer Vorrichtung 1 zum Abtrennen von Verunreinigungen aus dem Schmieröl einer Brennkraftmaschine als reines Filter ausgeführt. Die Vorrichtung besitzt hierzu ein Gehäuse 4, das einen feststehenden, unteren Gehäuseteil 42 und einen damit lösbar verbunden, oberen Schraubdeckel 41 umfaßt. In einem unteren, in der Figur 1 nicht dargestellten Teil des Filtergehäuses 4 sind Kanäle zumindest für die Zuführung von zu reinigendem Schmieröl und für die Abführung von gereinigtem Schmieröl in üblicher Art und Weise vorgesehen.

Der untere Gehäuseteil 42 und der Schraubdeckel 41 sind mittels eines Schraubgewindes 43 durch Verdrehen miteinander verbindbar oder voneinander trennbar. Mit dem Pfeil 41" am Schraubdeckel 41 ist dessen Festdrehrichtung gekennzeichnet.

In dem in Figur 1 gezeigten Zustand der Vorrichtung 1 ist der Schraubdeckel 41 fest mit dem unteren Gehäuseteil 42 verschraubt und durch einen Dichtring abgedichtet.

Im Inneren des Gehäuses 4 ist ein Filtereinsatz 2 angeordnet, der von üblicher Ausführung ist und aus einem zickzackförmig gefalteten, zu einem Hohlzylinder rundgebogenen Filterstoffkörper 21 besteht. Der Filterstoffkörper 21 ist an seinen beiden Stirnenden mit je einer Stirnscheibe dichtend verbunden, wobei in Figur 1 nur die obere Stirnscheibe 22 sichtbar ist.

Von der Oberseite der Stirnscheibe 22 erstreckt sich ein Kranz von Schnapphaken 24 nach oben, der bei üblichen Filtern für das Schmieröl einer Brennkraftmaschine zur Herstellung einer Rastverbindung zwischen Schraubdeckel und Filtereinsatz dient. Bei der in Figur 1 gezeigten Vorrichtung 1 wird ein Filtereinsatz 2 in einer gegenüber gängigen Ausführungen unveränderten Form verwendet, wobei aber hier die Funktion der ohnehin vorhandenen Schnapphaken 24 anders ist.

Die Schnapphaken 24 der oberen Stirnscheibe 22 des Filtereinsatzes 2 bilden hier Verbindungsmittel 25, die wahlweise mit Verbindungsmitteln 45 in und außer Eingriff bringbar sind. Die Verbindungsmittel 45 sind an der Innenseite des Schraubdeckels 41 passend zu den Verbindungsmitteln 25 radial unmittelbar außen von diesen angeordnet.

Die Verbindungsmittel 45 sind hier durch einen konzentrisch zur Längsmittelachse des Schraubdeckels 41 angeordneten, verdrehfest und unverlierbar mit dem übrigen Schraubdeckel 41 verbundenen Ring 46 mit Nockensegmenten gebildet. In dem in Figur 1, gezeigten Zustand liegen die Nocken der Nockensegmente des Ringes 46 so, daß sie jeweils zwischen zwei benachbarten Schnapphaken 24 der Stirnscheibe 22 liegen. Damit befinden sich also die Verbindungsmittel 25, 45 hier außer Eingriff.

Gleichzeitig sorgt der Schraubdeckel 41 in seiner in Figur 1 gezeigten festgedrehten Stellung dafür, daß der Filtereinsatz 2 innerhalb des Gehäuses 4 eine fixierte Lage einnimmt, indem der Schraubdeckel 41 in Anlage an die Oberseite der oberen Stirnscheibe 22 des Filtereinsatzes 2 tritt.

Dieser Zustand des Schraubdeckels 41 und diese Position des Filtereinsatzes 2 liegt im normalen Betrieb der Vorrichtung 1 vor.

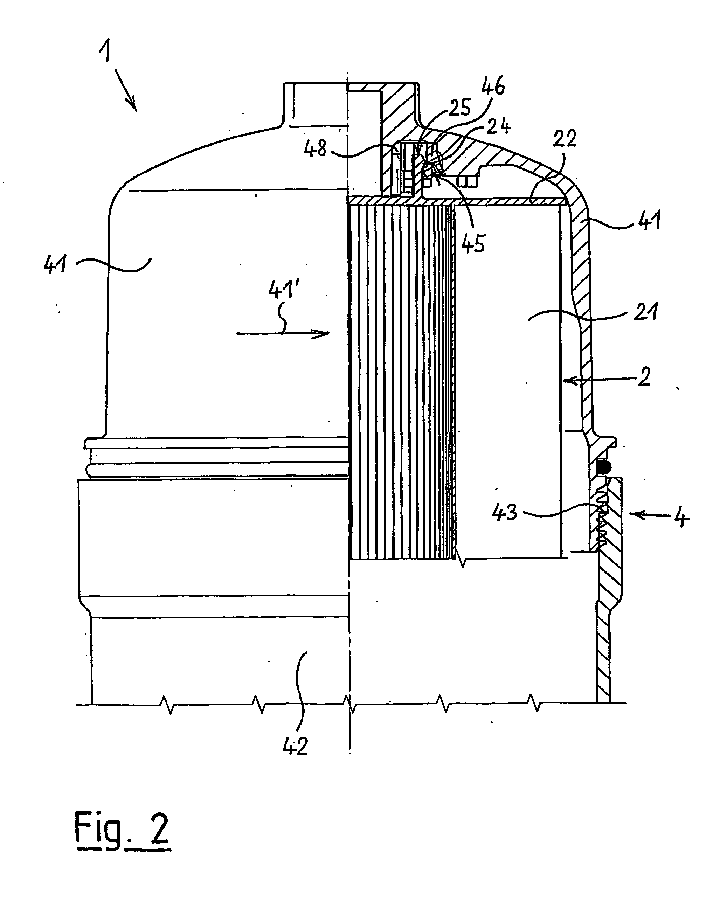

Figur 2 der Zeichnung zeigt nun die Vorrichtung 1 aus Figur 1 in gleicher Darstellung, jedoch in einem zweiten Betriebszustand während des Losdrehens des Schraubdeckels 41. Durch den Pfeil 41' ist die Losdrehrichtung des Schraubdeckels 41 dargestellt.

Durch die vosdrehbewegung des Schraubdeckels 41 wird dieser nicht nur gegenüber dem feststehenden Gehäuseteil 42 des Gehäuses'4 sondern in gleichem Sinne auch relativ zu dem Filtereinsatz 2 verdreht. Der Filtereinsatz 2 hat an seinem unteren Ende in üblicher Ausführung in seiner unteren Stirnscheibe eine zentrale Durchbrechung, die mittels einer axialen und/oder radialen Dichtung auf einem Anschlußstutzen sitzt. Eine Verdrehung des Filtereinsatzes 2 auf diesem Anschlußstutzen ist zwar möglich, jedoch nur unter Überwindung einer gewissen Reibungskraft, die zwischen der unteren Stirnscheibe des Filtereinsatzes 2 und dem Anschlußstutzen zwangsläufig auftritt.

Nach einem geringen Verdrehungswinkel des Schraubdeckels 41 in seiner Losdrehrichtung 41' von beispielsweise etwa 15° bis 30° gelangen die an dem Ring 46 vorhandenen Nokkensegmente in Gegenüberstellung zu den Schnapphaken 24. Sobald sich die Nockensegmente des Ringes 46 und die Schnapphaken 24 gegenüberstehen, ist infolge von im Ring 46 vorgesehenen Anschlägen eine weitere relative Verdrehung von Schraubdeckel 41 und Filtereinsatz 2 in derselben Richtung nicht mehr möglich. Die Verbindungsmittel 25, 45 befinden sich nun also in Eingriff miteinander. Da eine weitere relative Verdrehung von Schraubdeckel 41 und Filtereinsatz 2 in derselben Richtung über das erreichte Maß hinaus nicht mehr möglich ist, wird bei einem weiteren Losdrehen des Schraubdeckels 41 der Filtereinsatz 2 synchron mit dem Schraubdeckel 41 weitergedreht, wobei der Verbindungseingriff der Verbindungsmittel 25, 45 bestehen bleibt.

Die Verbindungsmittel 25, 45 sind in der Lage, eine ausreichende axiale Zugkraft vom Schraubdeckel 41 auf den Filtereinsatz 2 zu übertragen, so daß dieser gegen die Reibung auf seinem Anschlußstutzen zusammen mit dem Schraubdeckel 41 bei dessen Losdrehen nach oben bewegt und so schließlich aus dem Filtergehäuse 4 herausbewegt wird.

Um danach den Filtereinsatz 2 vom Schraubdeckel 41 zu trennen, genügt eine kurze Verdrehung des Schraubdeckels 41 in seine Festdrehrichtung relativ zum Filtereinsatz 2. Durch diese Verdrehung werden die Verbindungsmittel 25, 45 außer Eingriff gebracht und der Filtereinsatz 2 kann in Axialrichtung aus dem Schraubdeckel 41 herausgezogen werden, ohne daß dabei eine Zugkraft aufgewendet oder eine Verkantungsbewegung zum Entrasten ausgeführt werden müßte.

Ein frischer Filtereinsatz 2 kann dann in Axialrichtung mit seinen Verbindungsmitteln 25 zunächst in den Schraubdeckel 41 axial eingeführt und dann durch eine kleine Verdrehung des Schraubdeckels 41 in Losdrehrichtung relativ zum Filtereinsatz 2 mit diesem verbunden werden, wodurch die Verbindungsmittel 25, 45 in Eingriff treten. In diesem Zustand kann der Schraubdeckel 41 ergriffen werden und zusammen mit dem Filtereinsatz 2 zum unteren, feststehenden Gehäuseteil 42 bewegt und dann mit diesem durch eine Schraubbewegung wieder verbunden werden.

Beim Festdrehen des Schraubdeckels 41 gelangen zwar die Verbindungsmittel 25, 45 zwischen Schraubdeckel 41 und Filtereinsatz 2 außer Eingriff, was jedoch hier keine Rolle spielt, da der Filtereinsatz 2 nun bereits mit seinem unteren Ende auf seinem Anschlußstutzen sitzt. Die für das weitere Aufschieben des Filtereinsatzes 2 auf den Anschlußstutzen erforderliche Schubkraft überträgt der Schraubdeckel 41 auf die Oberseite der oberen Stirnscheibe 22, wo eine unmittelbare Anlage zwischen diesen beiden Teilen vorliegt.

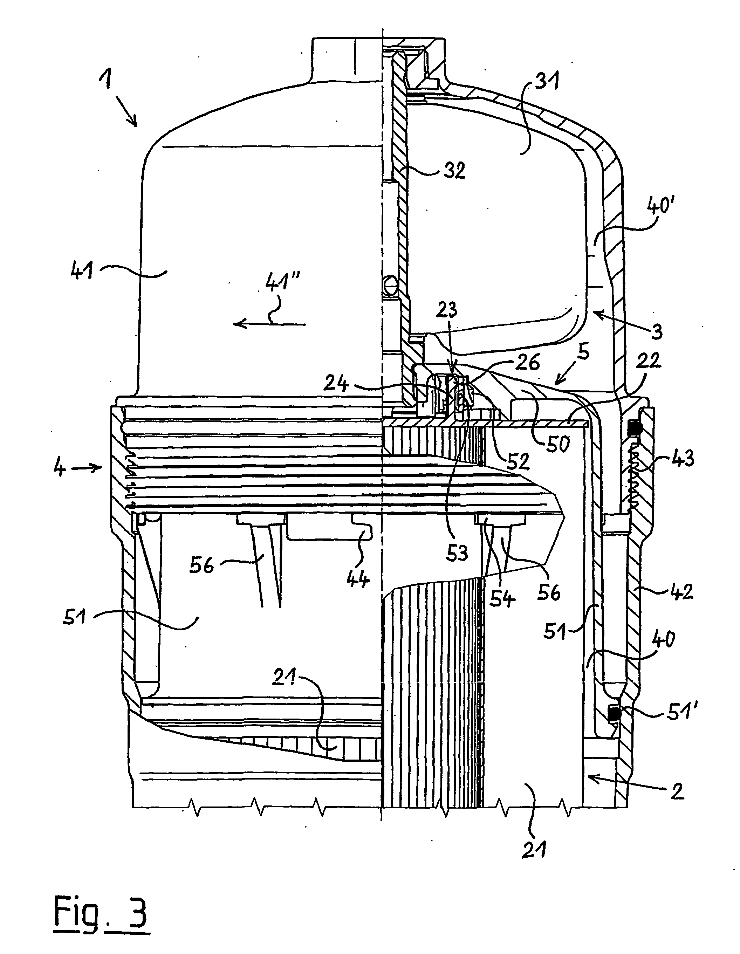

Wie die Figur 3 der Zeichnung zeigt, besitzt das dargestellte zweite Ausführungsbeispiel der Vorrichtung 1 zum Abtrennen von Verunreinigungen aus dem Schmieröl einer Brennkraftmaschine ebenfalls ein Gehäuse 4, das durch einen unteren, festen Gehäuseteil 42 und einen oberen Schraubdeckel 41 gebildet ist. Der Schraubdeckel 41 ist mittels einer durch einen Dichtring abgedichteten Gewindeverbindung 43 in den festen Gehäuseteil 42 einschraubbar, wobei in Figur 1 der Schraubdeckel 41 in seinem fest eingeschraubten.Zustand dargestellt ist.

Im Gehäuse 4 ist in dessen unterem Teil ein Filtereinsatz 2 in Form eines Filterstoffkörpers 21 mit einer oberen Stirnscheibe 22 und einer unteren, hier nicht sichtbaren Stirnscheibe angeordnet. Fluchtend mit dem Filtereinsatz 2 ist über diesem im oberen Teil des Gehäuses 4 eine Zentrifuge 3 vorgesehen, die einen auf einer Drehachse 32 drehbar gelagerten Rotor 31 umfaßt.

Das Innere des Gehäuses 4 ist durch einen glockenförmigen Zwischendeckel 5 in einen unteren Bereich 40 und einen oberen Bereich 40' unterteilt. Der Zwischendeckel 5 umfaßt einen oberen Teil 50, der oberhalb des Filtereinsatzes 2 und unterhalb des Rotors 31 der Zentrifuge 3 liegt. Vom äußeren Rand des oberen Teils 50 des Zwischendeckels 5 erstreckt sich eine Umfangswand 51 nach unten'. Diese ist an ihrem unteren Ende mittels eines Dichtrings 51' dichtend in das feststehende Gehäuse 42 eingesetzt. Unterhalb des Zwischendeckels 5 herrscht im Betrieb der Vorrichtung 1 der Betriebsöldruck; oberhalb des Zwischendeckels 5 liegt ein druckloser Bereich 40' als Ablauf für das aus dem Zentrifugenrotor 31 austretende Öl, wobei der Bereich 40' üblicherweise mit einer Ölwanne der zugehörigen Brennkraftmaschine verbunden ist.

Zentral in der Oberseite des oberen Teils 50 des Zwischendeckels 5 ist das untere Ende der Rotorachse 32 gehaltert. Das obere Ende der Rotorachse 32 ist zentral im oberen Endbereich der Innenseite des Schraubdeckels 41 gelagert.

Zwischen der oberen Stirnscheibe 22 und dem Zwischendekkel 5 sind Verbindungsmittel 23, 53 angeordnet, die wahlweise in und außer Eingriff miteinander bringbar sind. Die an der Stirnscheibe 22 vorgesehenen Verbindungsmittel sind durch einen Schnapphakenkranz 23 gebildet, der durch mehrere im Abstand voneinander nach oben aufragende Haken 24 mit je einer radial nach außen weisenden Nase 26 gebildet ist. Radial außerhalb dieses Schnapphakenkranzes 23 liegt ein Ring 53 als zwischendeckelseitiges Verbindungsmittel, wobei hier der Ring 53 mit Nockensegmenten ausgeführt ist, die den wahlweise herstellbaren oder aufhebbaren Eingriff zu dem Schnapphakenkranz 23 ermöglichen. Im vorliegenden Ausführungsbeispiel ist der Ring 53 mit den Nockensegmenten.als separates Bauteil von unten her in eine passende Ausnehmung 52 in den Zwischendeckel 5 eingesetzt und in der Durchbrechung 52 verdrehfest und unverlierbar gehaltert.

Zweite Verbindungsmittel sind zwischen dem unteren Ende des Schraubdeckels 41 und dem Außenumfang des Zwischendeckels 5 vorgesehen. Die Verbindungsmittel sind auf der Seite des Schraubdeckels 41 durch in Umfangsrichtung und in dessen Losdrehrichtung weisende Haken 44 gebildet, die an der Unterkante des Schraubdeckels 41 angeformt sind. Auf der Seite des Zwischendeckels 5 sind auf der Außenseite von dessen Umfangswand 51 in Axialrichtung verlaufende Rippen 56 mit Verbreiterungen 54 an deren oberem Ende angeformt. Die Verbreiterungen 54 und die Haken 44 bilden dabei die Verbindungsmittel, die, je nach Verdrehungszustand, wahlweise außer Eingriff oder in Eingriff treten.

In Figur 3 ist die Vorrichtung 1 in einem Zustand gezeigt, in dem der Schraubdeckel 41 fest mit dem feststehenden Teil 42 des Gehäuses 4 verschraubt ist. Diese Stellung wird durch Verdrehen des Schraubdeckels 41 in dessen Festdrehrichtung 41" erreicht. In dieser Stellung sind sowohl die ersten Verbindungsmittel 23, 53 als auch die zweiten Verbindungsmittel 44, 54 außer Eingriff, da eine Verdrehung dieser Teile relativ zueinander in der Weise beim Festdrehen des Schraubdeckels 41 erfolgt ist, daß der Eingriff der genannten Verbindungsmittel aufgehoben ist. In diesem Zustand können die Verbindungsmittel 23, 53 und 44, 54 keine Kräfte in Axialrichtung übertragen, was im zusammengebauten Zustand der Vorrichtung 1 auch nicht erforderlich ist.

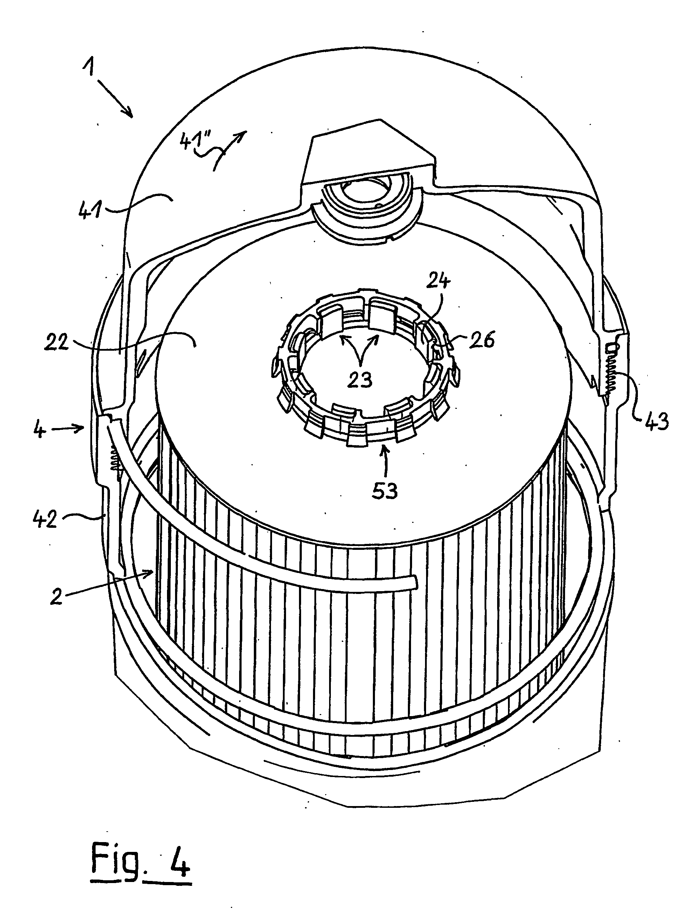

Die Vorrichtung 1 aus Figur 3 ist in Figur 4 in einer perspektivischen Ansicht schräg von oben unter Weglassung einiger Teile der Vorrichtung 1 dargestellt. Insbesondere ist hier aus Übersichtlichkeitsgründen die Zentrifuge 3 weggelassen. Von dem Zwischendeckel 5 ist in Figur 2 lediglich der das Verbindungsmittel bildende Ring 53 gezeigt. Im Zentrum der Figur 2 ist der Filtereinsatz 2 mit seiner oberen Stirnscheibe 22 erkennbar, von deren Oberseite der Schnapphakenkranz 23 mit den einzelnen Haken 24 mit jeweils einer nach außen weisenden Nase 26 vorragt. Mit diesem Schnapphakenkranz 23 wirkt der Ring 53, der Teil des nicht dargestellten Zwischendeckels 5 ist, zusammen. In der in Figur 2 sichtbaren Verdrehstellung, die der Verdrehstellung gemäß Figur 1 entspricht, besteht kein Eingriff zwischen dem Schnapphakenkranz 23 und dem Ring 53, so daß in diesem Zustand keine axialen Kräfte zwischen den beiden Teilen übertragen werden können. Die Schraubverbindung 43 zwischen dem Schraubdeckel 41 und dem festen Teil 42 des Gehäuses 4 ist hier, entsprechend dem Zustand in Figur 1, vollständig in Richtung der Festdrehrichtung 41" festgedreht.

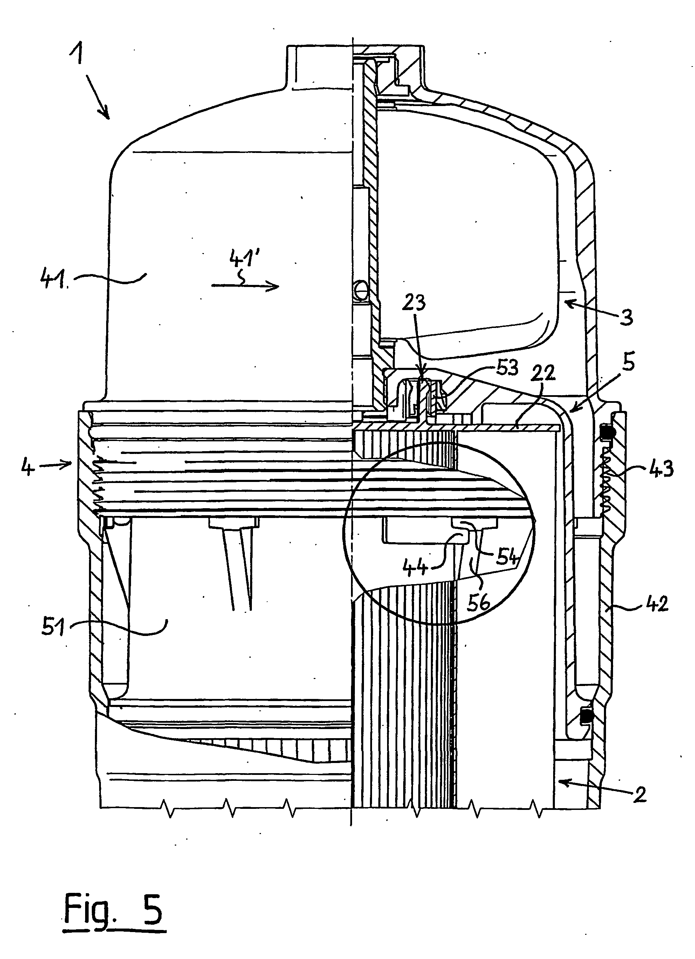

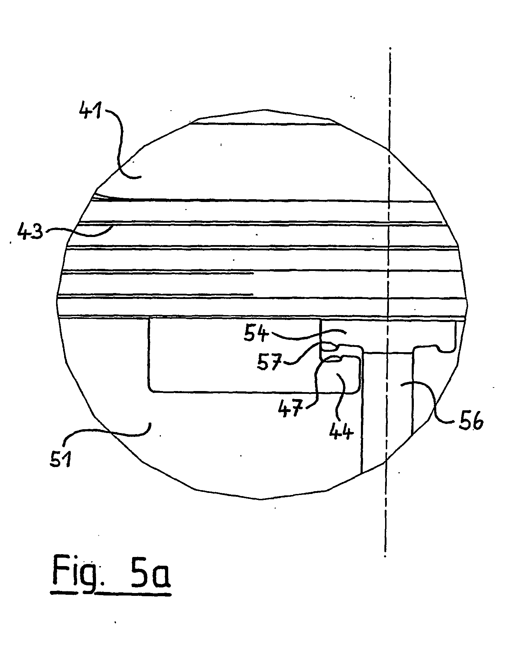

Figur 5 der Zeichnung zeigt in einer der Figur 3 entsprechenden Darstellung die Vorrichtung 1 nach einem Verdrehen des Schraubdeckels 41 um etwa 45° in dessen Losdrehrichtung 41'. Durch diese Verdrehung des Schraubdeckels 41 gelangen dessen Haken 44 in Eingriff mit den Verbreiterungen 54, wie in dem in Figur 5 eingekreisten Bereich sichtbar ist.

Bis zu dem hier erreichten Drehwinkel wird lediglich der Schraubdeckel 41' bewegt; eine Verdrehung des Zwischendeckels 5 ist hier noch nicht erfolgt. Aus diesem Grunde befinden sich die Verbindungsmittel 23 der Stirnscheibe 22 des Filtereinsatzes 2 und die Verbindungsmittel 53 in Form des Ringes an dem Zwischendeckel 5 immer noch außer Eingriff.

In dem in Figur 5 eingekreisten Bereich sind die miteinander in Eingriff tretenden Flächen der Verbindungsmittel 44, 54 geradlinig ausgebildet. Um zu vermeiden, daß hier das Lösen des Eingriffs zu leicht und dadurch ungewollt selbsttätig geschehen kann, kann gemäß Figur 5a eine Abwandlung vorgesehen sein. Bei dieser Abwandlung gemäß Figur 5a sind die miteinander in Eingriff tretenden Flächen oder Bereiche der Verbindungsmittel 44, 54 mit je einer Stufe 47, 57 versehen. Diese Stufen 47, 57 sorgen dafür, daß bei Ausübung einer Zugkraft in Axialrichtung der Eingriff sich nicht mehr ohne weiteres selbsttätig lösen kann.

Im oberen Teil der Figur 5a ist noch ein kleiner Teil des Schraubdeckels 41 mit seinem Gewinde 43 erkennbar. Rechts unten in Figur 5a ist noch ein Abschnitt einer der Rippen 56 auf der Außenseite der Umfangswand 51 des Zwischendekkels 5 sichtbar.

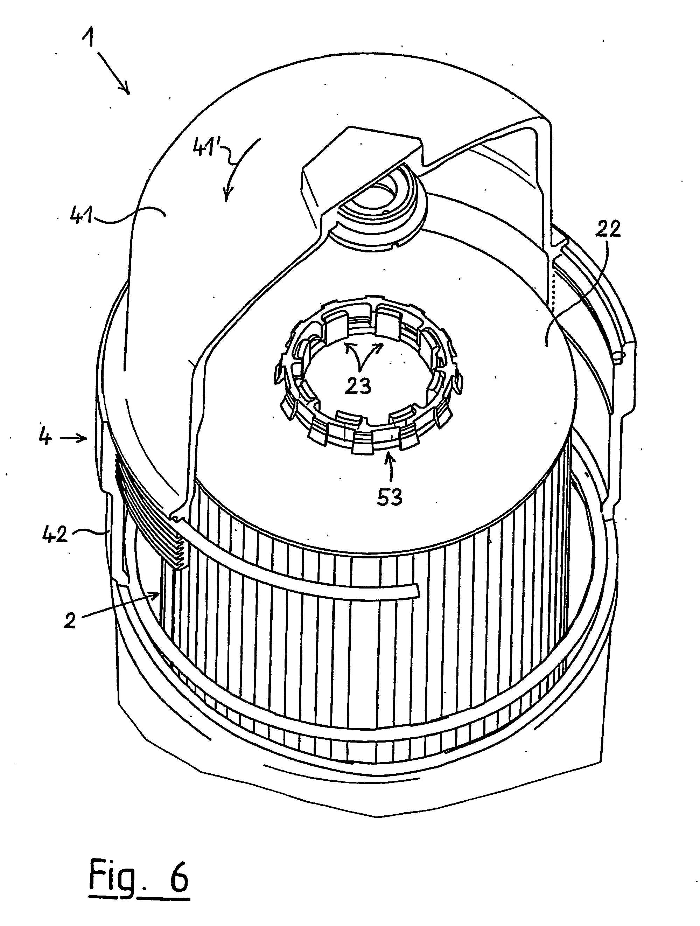

Figur 6 zeigt die Vorrichtung 1 in dem schon in Figur 5 gezeigten Verdrehzustand des Schraubdeckels 41, in perspektivischer Ansicht schräg von oben in einer gleichen Darstellungsweise wie in Figur 4. Figur 6 verdeutlicht, daß der Schraubdeckel 41 gegenüber der Position in Figur 4 nun um etwa 45° in Losdrehrichtung 41' verdreht ist. Bei dieser Verdrehung wird allein der Schraubdeckel 41 verdreht, da dessen Verdrehung sich noch nicht auf den Zwischendeckel 5 übertragen hat. Aus diesem Grund sind auch nach wie vor die Verbindungsmittel 23 der oberen Stirnscheibe 22 des Filtereinsatzes 2 und die Verbindungsmittel 53 als Teil des in Figur 4 nicht dargestellten Zwischendeckels 5 außer Eingriff.

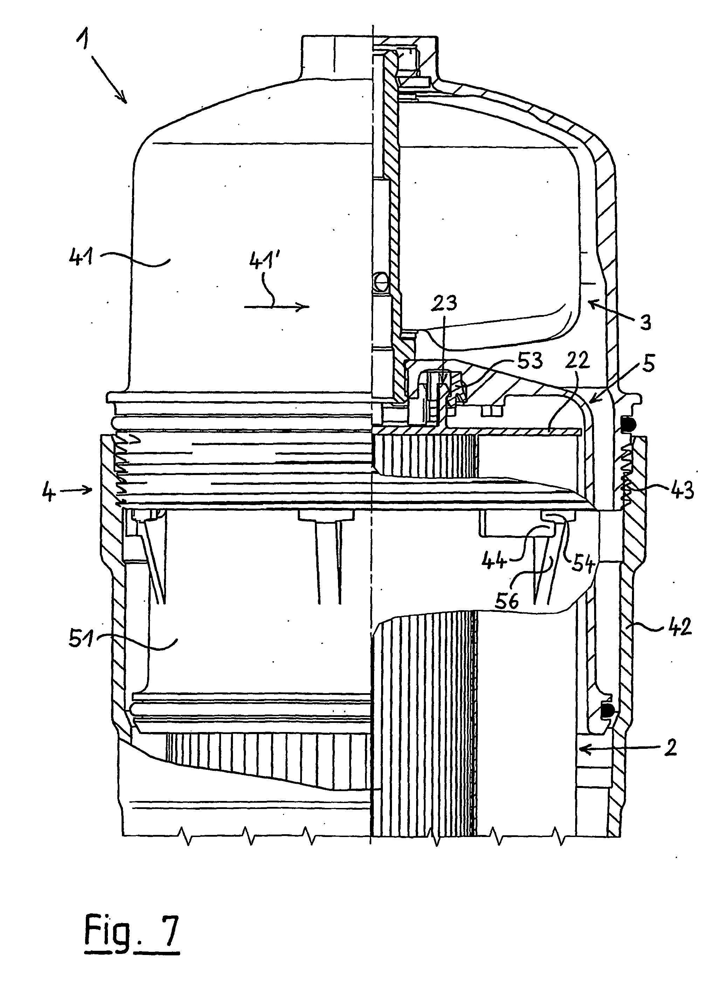

Figur 7 zeigt die Vorrichtung 1 in einem Zustand, in dem der Schraubdeckel 41 noch weiter in Losdrehrichtung 41' verdreht ist. Aufgrund dieser weiteren Verdrehung des Schraubdeckels 41 nimmt dieser den Zwischendeckel 5 infolge eines Auflaufens der Haken 44 auf die Verbreiterungen 54 in Losdrehrichtung mit. Dadurch verdreht sich der Zwischendeckel 5 nun relativ zum Filtereinsatz 2 in einer solchen Weise, daß zwischen den Verbindungsmitteln 23 des Filtereinsatzes 2 und den Verbindungsmitteln 53 des Zwischendeckels 5 nun ein Eingriff hergestellt wird, wie er oberhalb der oberen Stirnscheibe 22 an den Verbindungsmitteln 23, 53 sichtbar ist. In diesem Zustand sind also sowohl die ersten Verbindungsmittel 23, 53 zwischen dem Zwischendeckel 5 und dem Filtereinsatz 2 als auch die zweiten Verbindungsmittel 44, 54 zwischen dem Schraubdekkel 41 und dem Zwischendeckel 5 in Eingriff. Hieran ändert sich bei weiterer Verdrehung des Schraubdeckels 41 in dessen Losdrehrichtung 41' nichts mehr. Bei weiterem Verdrehen des Schraubdeckels 41 kommt dieser von dem festen Teil 42 des Gehäuses 4 frei. Aufgrund des Eingriffs der Verbindungsmittel 23, 53 und 44, 54 nimmt dabei der Schraubdeckel 41 die Zentrifuge 3, den Zwischendeckel 5 und den Filtereinsatz 2 mit nach oben. Dabei kann der Zwischendeckel 5 problemlos auch gegen ein Vakuum aus dem festen Gehäuseteil 42 herausgezogen werden.

Danach kann das Trennen des Filtereinsatzes 2 von dem Zwischendeckel 5 einfach durch eine kurze Verdrehung der beiden Teile gegeneinander in einer zu der vorherigen Drehrichtung umgekehrten Drehrichtung erfolgen, wodurch ohne besonderen Kraftaufwand der Eingriff zwischen den Verbindungsmitteln 23, 53 aufgehoben wird und der Filtereinsatz 2 in Axialrichtung nach unten aus dem Zwischendeckel 5 herausgezogen werden kann. Vorteile ergeben sich hier insbesondere bei solchen Vorrichtungen 1, bei denen der Zwischendeckel 5 den Filtereinsatz 2 über einen großen Teil von dessen Höhe überdeckt, da hier das übliche Verkanten zum Ausrasten nicht möglich wäre.

Zur Trennung des Zwischendeckels 5 von dem Schraubdeckel 41 genügt ebenfalls eine kurze Verdrehung entgegen der vorherigen Drehrichtung, wodurch die Verbindungsmittel 44, 54 außer Eingriff gelangen. Auf diese Weise kann zunächst der Schraubdeckel 41 von dem Zwischendeckel 5 in Axialrichtung entfernt werden. Hierdurch wird gleichzeitig die Zentrifuge 3 für einen gegebenenfalls erforderlichen Austausch des Zentrifugenrotors 31 zugänglich.

Der Zusammenbau der einzelnen Teile der Vorrichtung 1 erfolgt in umgekehrter Reihenfolge und mit umgekehrten Drehrichtungen. Danach kann dann eine zusammengefügte Einheit aus Schraubdeckel 41, Zentrifuge 3, Zwischendekkel 5 und Filtereinsatz 2 gemeinsam durch Festdrehen des Schraubdeckels 41 mit dem feststehenden Teil 42 des Gehäuses 4 verbunden werden.

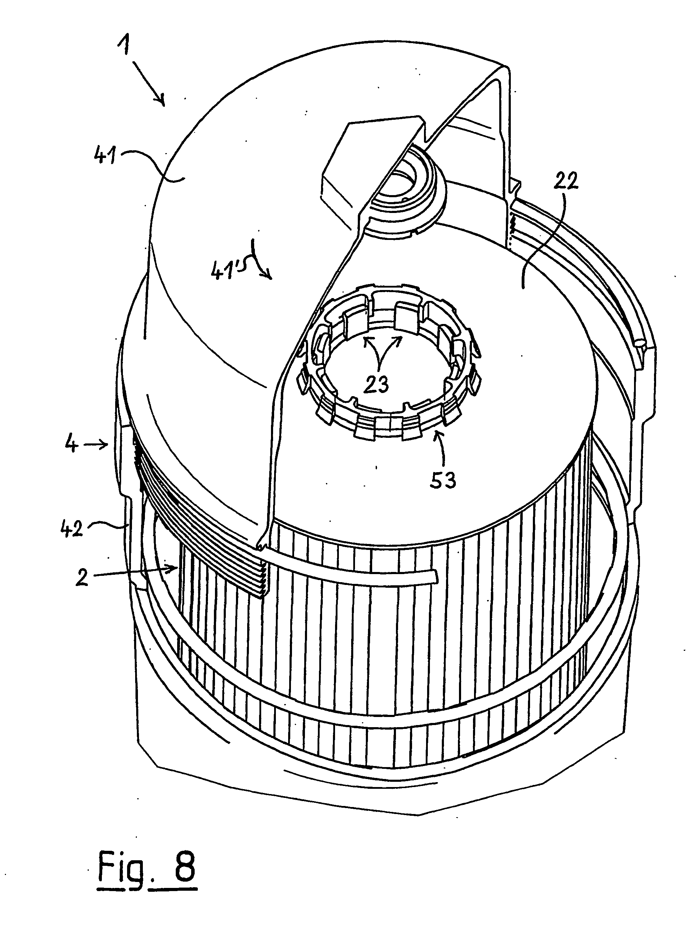

Figur 8 zeigt die Vorrichtung 1 im Zustand gemäß Figur 7, nun wieder in einer perspektivischen Ansicht schräg von oben unter Weglassung einzelner Teile und in teilweise aufgeschnittenem Zustand. Hier wird deutlich, daß nun der Schraubdeckel 41 noch weiter in seiner Losdrehrichtung 41' verdreht ist. Hierdurch wird, wie anhand von Figur 7 schon beschrieben, auch der in Figur 8 nicht dargestellte Zwischendeckel 5 zusammen mit dem daran verdrehfest angebrachten Ring 53 mit den Nockensegmenten entsprechend verdreht. Die Verdrehung des Rings 53 erfolgt dabei relativ zu dem Filtereinsatz 2 und zu dem auf dessen oberer Stirnscheibe 22 angeordneten Schnapphakenkranz 23. In dieser Stellung sind die Verbindungsmittel 23, 53 in Eingriff, so daß eine axiale Zugkraft von dem Zwischendeckel 5 über die Verbindungsmittel 23, 53 auf den Filtereinsatz 2 übertragen werden kann.

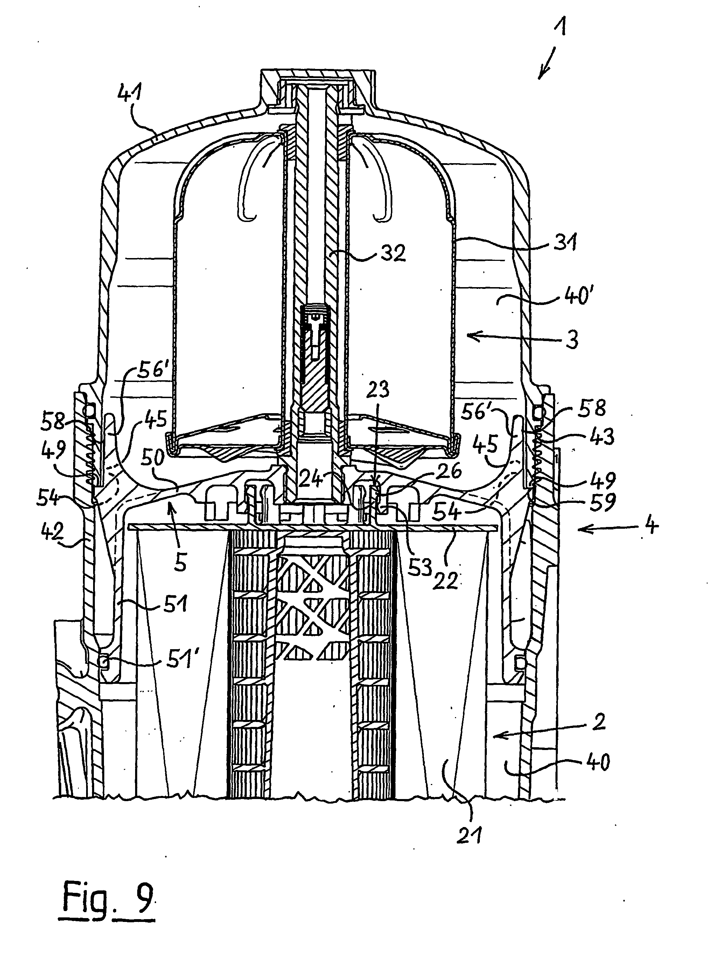

Die Figuren 9 bis 12 zeigen ein drittes Ausführungsbeispiel einer Vorrichtung 1, die ebenfalls eine Zentrifuge 3 und einen Filtereinsatz 2 innerhalb eines gemeinsamen Gehäuses 4 umfaßt.

Der Längsschnitt gemäß Figur 9 zeigt diese Anordnung von Zentrifuge 3 oben und Filtereinsatz 2 unten im Gehäuse 4. Auch hier ist das Gehäuse 4 mit einem feststehenden unteren Gehäuseteil 42 und einem damit über ein Gewinde 43 verbundenen, losdrehbaren Schraubdeckel 41 ausgeführt. Durch den Zwischendeckel 5 ist das Innere des Gehäuses 4 in einen unteren Gehäusebereich 40, der den Filtereinsatz 2 aufnimmt, und einen oberen Gehäuseteil 40', der die Zentrifuge 3 aufnimmt, unterteilt. Der Zwischendeckel 5 ist auch hier etwa glockenförmig ausgeführt und besitzt einen gewölbten oberen Teil 50 sowie einen sich daran nach unten anschließenden Umfangsbereich 51. Unten an diesem Umfangsbereich 51 ist ein Dichtring 51' in eine radial nach außen weisende Nut eingelegt, womit der Zwischendeckel 5 dichtend im unteren Teil 42 des Gehäuses 4 liegt.

An der Unterseite des oberen Teils 50 des Zwischendeckels 5 sind Verbindungsmittel 53 angeordnet, die mit Verbindungsmitteln 23 an der Oberseite der oberen Stirnscheibe 22 des Filtereinsatzes 2 in Eingriff gebracht sind. Mittels dieser Verbindungsmittel 23, 53 sind.axiale Zugkräfte vom Zwischendeckel 5 auf den Filtereinsatz 2 mit seinem Filterstoffkörper 21 ausübbar. Die Verbindungsmittel 23 auf der Seite des Filtereinsatzes 2 sind hier durch einen Kranz von Rasthaken 24 mit Rastnasen 26 gebildet. Die Verbindung kann hier als Rastverbindung oder als Drehverbindung gestaltet sein.

Die Zentrifuge 3 besitzt einen Zentrifugenrotor 31, der drehbar auf einer Rotorachse 32 gelagert ist. Mit ihrem unteren Ende sitzt diese Rotorachse 32 in einer passenden Ausnehmung in der Oberseite des Zwischendeckels 5. Mit ihrem oberen Ende sitzt die Rotorachse 32 in einer passenden zentralen Ausnehmung an der Innenseite des Schraubdeckels 41.

Weiterhin sind auch bei diesem Ausführungsbeispiel der Vorrichtung 1 zwischen dem Schraubdeckel 41 und dem Zwischendeckel 5 Verbindungsmittel 45, 54 vorgesehen, die durch Verdrehen des Schraubdeckels 41 wahlweise in Eingriff und außer Eingriff bringbar sind. In dem in Figur 9 gezeigten Zustand der Vorrichtung 1 mit vollständig festgedrehtem Schraubdeckel 41 befinden sich die Verbindungsmittel 45, 54 außer Eingriff.

Im Betrieb der Vorrichtung 1 strömt zu reinigendes Schmieröl durch einen nicht sichtbaren Einlaß zunächst in den unteren Gehäusebereich 40 und von dort radial von außen nach innen durch den Filterstoffkörper 21. Ein Teil des durch diesen Filterstoffkörper 21 geströmten Schmieröls gelangt nach oben in die Zentrifuge 3 und von dort nach dem Verlassen des Zentrifugenrotors 31 in den oberen Gehäusebereich 40'. Dieser Gehäusebereich 40' ist drucklos'und über eine nicht gezeigte Rückführleitung mit dem Ölsumpf einer zugehörigen Brennkraftmaschine verbunden.

Im Gegensatz zu dem oberen Gehäusebereich 40' herrscht im Gehäusebereich 40 unterhalb des Schraubdeckels 5 der volle Öldruck. Um die durch diese Druckdifferenz erzeugte, in Axialrichtung nach oben auf den Zwischendeckel 5 wirkende Kraft aufzunehmen und abzuleiten, besitzt der Zwischendeckel 5 radial außen an seinem oberen Teil 50 nach außen vorspringende Stufen 59. Auf diesen Stufen 59 steht der Schraubdeckel 41 in seinem festgeschraubten Zustand mit seiner Unterkante 49 auf. Hierdurch wird der Zwischendeckel 5 in seiner Lage gesichert und kann die durch die Druckdifferenz auftretende Kraft'problemlos aufnehmen und an das Gehäuse 4 der Vorrichtung 1 ableiten.

Bei der Montage der Vorrichtung 1 wird eine möglichst rationelle Arbeitsweise angestrebt. Die Vorrichtung 1 gemäß Figur 9 bietet die Möglichkeit einer weitgehenden Vormontage. Hierzu wird zunächst der Filtereinsatz 2 über seine Verbindungsmittel 23 mit den Verbindungsmitteln 53 am Zwischendeckel 5 in Eingriff gebracht. Danach kann die Rotorwelle 32 mit dem darauf angeordneten Zentrifugenrotor 31 von oben her in den Zwischendeckel 5 eingesteckt werden. Anschließend wird diese vormontierte Einheit aus Filtereinsatz 2, Zwischendeckel 5 und Zentrifuge 3 von unten her in den Schraubdeckel 41 eingeführt, bis das obere Ende der Rotorachse 32 passend in der zugehörigen Ausnehmung an der Innenseite des Deckels 41 sitzt. Diese nun auch den Schraubdeckel 4 umfassende vormontierte Baueinheit kann dann durch Festschrauben des Schraubdeckels 41 mit dem festen Gehäuseteil 40 der Vorrichtung 1 verbunden werden.

Um Schwierigkeiten bei der Einführung des oberen Endes der Rotorachse 32 in die zugehörige Ausnehmung im Deckel 41 zu vermeiden und um die weiter oben schon erwähnten Verbindungsmittel 45, 54 zwischen Schraubdeckel 41 und Zwischendeckel 5 unterzubringen, ist der Zwischendeckel 5 hier radial außen an seinem oberen Teil 50 mit mehreren sich nach außen und oben erstreckenden Flügeln 56' ausgestattet. Die Flügel 56' sind in einem gleichmäßigen Abstand in Umfangsrichtung über den Zwischendeckel 5 verteilt, wobei hier insgesamt vier Flügel 56' im Abstand von jeweils 90° vorgesehen sind.

Jeder Flügel 56' besitzt radial außen eine in Axialrichtung verlaufende Führungskontur 58, die mit einem geringen Bewegungsspiel in das Innere des unteren Teils des Schraubdeckels 41 paßt. Durch diese Führungskontur 58 wird sichergestellt, daß beim Zusammenfügen von Zwischendeckel 5 und Schraubdeckel 41 keine Verkantungen auftreten. Vielmehr wird das Zusammenfügen mit exakt axialer Ausrichtung zwangsläufig hergestellt, wofür die Führungskontur 58 sorgt. Damit wird gleichzeitig gewährleistet, daß das obere Ende der Rotorachse 32 immer zielgenau in die zugehörige Ausnehmung an der Innenseite des Schraubdeckels 41 gelangt.

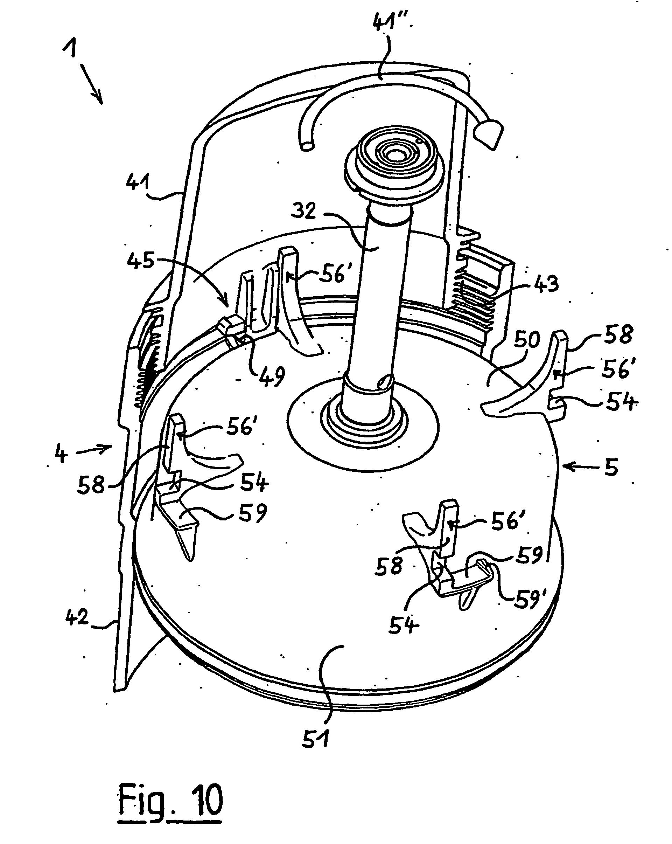

Figur 10 zeigt die Vorrichtung 1 aus Figur 9 in perspektivischer Ansicht in aufgeschnittener Darstellung, wobei aus Übersichtlichkeitsgründen hier der Filtereinsatz und der Zentrifugenrotor weggelassen sind.

Der Deckel 41 des Gehäuses 4 befindet sich hier in seiner vollständig festgedrehten Stellung. Die Festdrehrichtung des Schraubdeckels 41 ist durch den Drehpfeil 41" veranschaulicht.

Besonders deutlich wird aus Figur 10 die Anordnung und Verteilung der Flügel 56' an dem Zwischendeckel 5 erkennbar. Jeder Flügel 56' besitzt radial außen die zuvor schon erläuterte Führungskontur 58, die in Axialrichtung des Schraubdeckels 41 verläuft. Außerdem besitzt jeder Flügel 56' eine radial nach außen hin offene, rechteckige Durchbrechung, die das Verbindungsmittel 54 zum Eingriff mit den Verbindungsmitteln 45 am Schraubdeckel 41 bildet.

In Figur 10 ist der Schraubdeckel 41, wie erwähnt, vollständig festgedreht. In dieser Verdrehstellung des Schraubdeckels 41 sind die Verbindungsmittel 45, 54 außer Eingriff. Die Verbindungsmittel 45 am Schraubdeckel 41 liegen hier lediglich in Umfangsrichtung betrachtet an den Flügeln 56' an, wobei nun zwar eine Drehbewegung vom Schraubdeckel 41 auf den Zwischendeckel 5 in Festdrehrichtung übertragbar ist, nicht jedoch ein axiale Zugkraft.

Neben jedem Flügel 56' ist an dem Zwischendeckel 5 jeweils eine nach außen springende Stufe 59 ausgebildet. Diese Stufen 59 dienen zur Ableitung von axialen Kräften, die durch die Druckdifferenz zwischen der Unterseite und der Oberseite des Zwischendeckels 5 entstehen. Auf diesen Stufen 59 steht im festgedrehten Zustand des Schraubdekkels 41 dessen im Bereich der Verbindungsmittel 45 liegende Unterkante 49 auf. Dadurch werden die entstehenden, axial nach oben wirkenden Kräfte großflächig auf den Schraubdeckel 41 und über das Gewinde 43 auf den übrigen Teil des Gehäuses 4 abgeleitet.

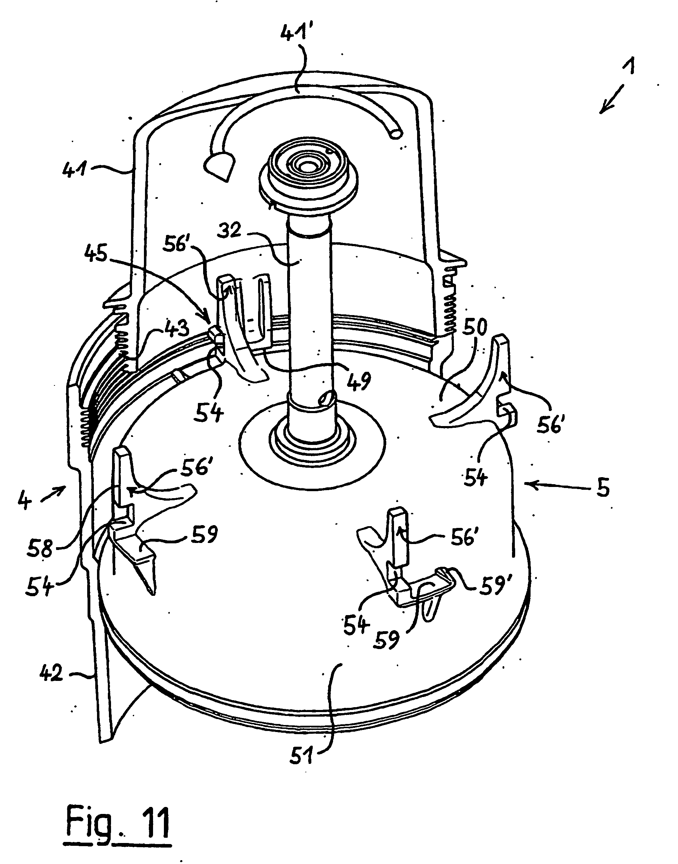

Figur 11 der Zeichnung zeigt die Vorrichtung 1 aus Figur 9 und Figur 10 nun zu Beginn eines Losdrehens des Schraubdeckels 41. Die Losdrehrichtung des Schraubdeckels 41 ist durch den Drehpfeil 41' dargestellt.

Durch das Verdrehen des Schraubdeckels 41 im Sinne des Drehpfeils 41' gelangen die Verbindungsmittel 45 am Schraubdeckel 41 in Eingriff mit den Verbindungsmitteln 54 am Zwischendeckel 5, wie links oben in Figur 11 sichtbar ist. Die drei weiteren Verbindungsmittel 45 des Schraubdeckels 41 sind aufgrund von dessen weggebrochener Darstellung in Figur 11 nicht sichtbar, stehen aber im gleichen Verbindungseingriff mit den weiteren Verbindungsmitteln 54 des Zwischendeckels 5.

Bei weiterer Verdrehung des Schraubdeckels 41 in seiner Losdrehrichtung 41' wird der Zwischendeckel 5 sowohl in Losdrehrichtung mitgedreht als auch in gewünschter Weise in Axialrichtung mit nach oben genommen und so aus dem unteren Teil 42 des Gehäuses 4 herausbewegt.

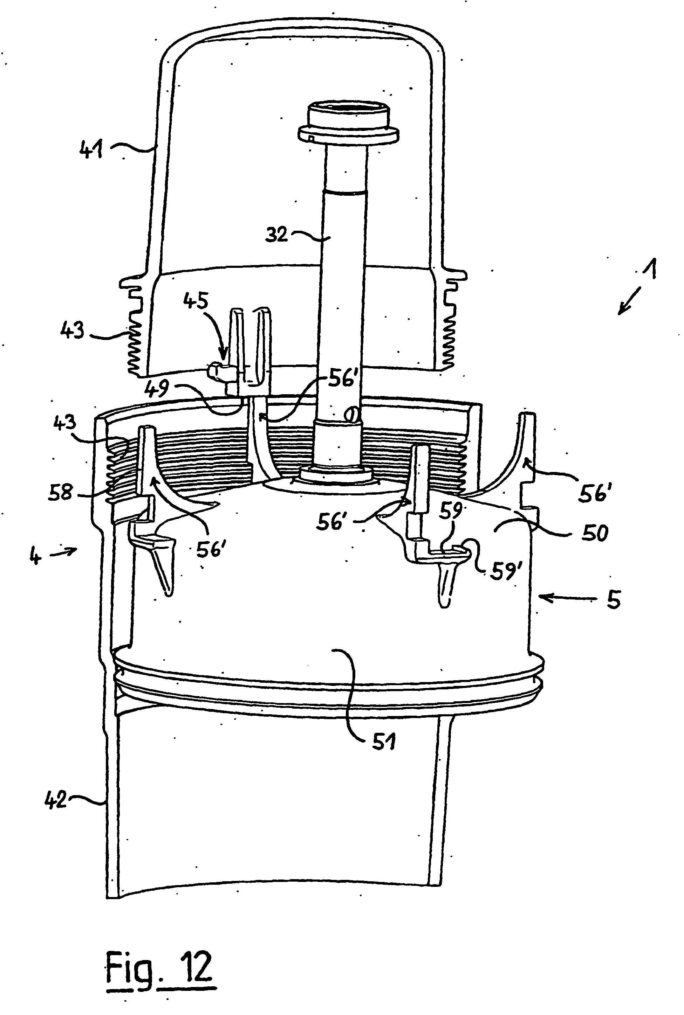

Figur 12 schließlich zeigt den Schraubdeckel 1 in einem vollständig vom unteren Teil 42 des Gehäuses 4 losgedrehten und getrennten Zustand. Hier ist nun also das Gewinde 43 von Schraubdeckel 41 und unterem Gehäuseteil 42 außer Eingriff. Die zunächst gemeinsam vom feststehenden Gehäuseteil 42 gelösten einzelnen Teile der Vorrichtung 1 können nun durch einfache Drehbewegung voneinander getrennt werden und die zu erneuernden Teile, hier der Zentrifugenrotor und der Filtereinsatz, können ersetzt werden.

Wie an dem losgedrehten Schraubdeckel 41 in Figur 12 an dessen unterem Bereich deutlich erkennbar ist, ragen die Verbindungsmittel 45 etwas nach unten hin vor, wodurch die Unterkante 49 des Schraubdeckels 41 hier etwas tiefer liegt als die Unterkante des Gewindes 43 am Schraubdeckel 41. Gleichzeitig erstrecken sich die Flügel 56' am Zwischendeckel 5 in Axialrichtung so weit nach oben, daß vor einem Eingriff der Gewinde 43 miteinander sich die Verbindungsmittel 45 des Schraubdeckels 41 und die Flügel 56' des Zwischendeckels 5 in Axialrichtung überlappen. Hierdurch wird sicher vermieden, daß sich die Unterkante 49 während des Festschraubens des Schraubdeckels 41 in Axialrichtung gesehen von oben her auf das obere Ende der Flügel 56' setzten kann, so daß auch hierdurch verursachte Verklemmungen beim Festdrehen des Schraubdeckels 41 vermieden werden. Vielmehr kann der Gewindeeingriff der Gewinde 43 erst dann erfolgen, wenn die Verbindungsmittel 45 in Axialrichtung gesehen zwischen zwei benachbarten Flügeln 56' des Schraubdeckels 5 liegen.

## Patentansprüche

1. Vorrichtung (1) zum Abtrennen von Verunreinigungen aus dem Schmieröl einer Brennkraftmaschine, wobei die Vorrichtung (1) einen Filtereinsatz (2) aufweist, wobei der Filtereinsatz (2) in einem im Betrieb der Vorrichtung (1) verschlossenen, zweiteiligen Gehäuse (4) mit einem festen, unteren Gehäuseteil (42) und einem abnehmbaren, oberen Schraubdeckel (41) angeordnet ist und wobei der Schraubdeckel (41) und der Filtereinsatz (2) miteinander in Eingriff bringbare, lösbare Verbindungsmittel (25, 45) zur Übertragung axialer Zugkräfte aufweisen, wobei mittels dieser Verbindungsmittel (25, 45) bei einem Losdrehen des Schraubdeckels (41) der Filtereinsatz (2) aus dem Gehäuse (4) heraus mitnehmbar ist,
**dadurch gekennzeichnet,**
**daß** die Verbindungsmittel (25, 45) durch Verdrehen des Schraubdeckels (41) in seiner Losdrehrichtung (41') in Eingriff miteinander und durch Verdrehen des Schraubdeckels (41) in seiner Festdrehrichtung (41'') außer Eingriff bringbare Verbindungsmittel (25, 45) sind.

2. Vorrichtung nach Anspruch 1, **dadurch gekennzeichnet, daß** der Drehwinkel, den der Schraubdeckel (41) zwischen der Nichteingriffsstellung und der Eingriffsstellung der Verbindungsmittel (25, 45) zurücklegt, zwischen etwa 15° und 30° beträgt.

3. Vorrichtung nach Anspruch 1 oder 2, **dadurch gekennzeichnet, daß** die filtereinsatzseitigen Verbindungsmittel (25) durch einen an einer oberen Stirnscheibe (22) des Filtereinsatzes (2) ohnehin vorhandenen konzentrischen Kranz von Schnapphaken (24) gebildet sind und daß die zugehörigen Verbindungsmittel (45) des Schraubdeckels (41) durch einen an der Unterseite von dessen oberem Teil konzentrisch angeordneten Ring (46) mit Nockensegmenten gebildet sind, wobei in einer ersten, durch Verdrehen des Schraubdeckels (41) in seiner Festdrehrichtung (41'') einstellbaren Verdrehstellung relativ zueinander der Kranz von Schnapphaken (24) axial in den Ring (46) und aus dem Ring (46) mit den Nockensegmenten bewegbar ist und wobei in einer zweiten, durch Verdrehen des Schraubdeckels (41) in Losdrehrichtung (41') einstellbaren Verdrehstellung relativ zueinander der in den Ring (46) bewegte Kranz von Schnapphaken (24) axial nicht aus dem Ring (46) mit den Nockensegmenten heraus bewegbar ist.

4. Vorrichtung nach Anspruch 3, **dadurch gekennzeichnet, daß** der Ring (46) mit den Nockensegmenten als separates Bauteil verdrehfest und verliersicher in eine Ausnehmung (48) des Schraubdeckels (4i) eingesetzt ist.

5. Vorrichtung (1) zum Abtrennen von Verunreinigungen aus dem Schmieröl einer Brennkraftmaschine, wobei die Vorrichtung (1) unten einen Filtereinsatz (2) und darüber eine Zentrifuge (3) mit einem mittels durchströmenden Schmieröls antreibbaren Rotor (31) aufweist, wobei der Filtereinsatz (2) und die Zentrifuge (3) übereinander in einem gemeinsamen, im Betrieb der Vorrichtung (1) verschlossenen, zweiteiligen Gehäuse (4) mit einem abnehmbaren oberen Schraubdeckel (41) und einem festen unteren Gehäuseteil (42) angeordnet sind, wobei in dem Gehäuse (4) zwischen Filtereinsatz (2) und Zentrifuge (3) ein herausnehmbarer zwischendeckel (5) angeordnet ist, wobei der Zwischendeckel (5) und der Filtereinsatz (2) erste miteinander in Eingriff bringbare, lösbare Verbindungsmittel (23, 53) zur Übertragung axialer Zugkräfte aufweisen und wobei aus dem Gehäuse (4) in dessen geöffnetem Zustand die Zentrifuge (3), der Zwischendeckel (5) und der Filtereinsatz (2) herausnehmbar sind,
**dadurch gekennzeichnet,**
- **daß** zusätzlich der Schraubdeckel (41) und der Zwischendeckel (5) zweite miteinander in Eingriff bringbare, lösbare Verbindungsmittel (44, 54) zur Übertragung axialer Zugkräfte aufweisen,
- **daß** die zweiten Verbindungsmittel (44, 54) durch Verdrehen des Schraubdeckels (41) in seiner Losdrehrichtung (41') relativ zum Zwischendeckel (5) in Eingriff und durch Verdrehen des Schraubdeckels (41) in seiner Festdrehrichtung (41'') relativ zum Zwischendeckel (5) außer Eingriff bringbar sind und
- **daß** die Verbindung zwischen den ersten Verbindungsmitteln (23, 53) als Rastverbindung gestaltet ist, wobei die Verbindungsmittel (23) auf der Seite des Filtereinsatzes (2) durch einen Kranz von Rasthaken (24) mit Rastnasen (26) gebildet sind.

6. Vorrichtung (1) zum Abtrennen von Verunreinigungen aus dem Schmieröl einer Brennkraftmaschine, wobei die Vorrichtung (1) unten einen Filtereinsatz (2) und darüber eine Zentrifuge (3) mit einem mittels durchströmenden Schmieröls antreibbaren Rotor (31) aufweist, wobei der Filtereinsatz (2) und die Zentrifuge (3) übereinander in einem gemeinsamen, im Betrieb der Vorrichtung (1) verschlossenen, zweiteiligen Gehäuse (4) mit einem abnehmbaren oberen Schraubdeckel (41) und einem festen unteren Gehäuseteil (42) angeordnet sind, wobei in dem Gehäuse (4) zwischen Filtereinsatz (2) und Zentrifuge (3) ein herausnehmbarer Zwischendeckel (5) angeordnet ist, wobei der Zwischendeckel (5) und der Filtereinsatz (2) erste miteinander in Eingriff bringbare, lösbare Verbindungsmittel (23, 53) zur Übertragung axialer Zugkräfte aufweisen und wobei aus dem Gehäuse (4) in dessen geöffnetem Zustand die Zentrifuge (3), der Zwischendeckel (5) und der Filtereinsatz (2) herausnehmbar sind,
**dadurch gekennzeichnet,**
- **daß** zusätzlich der Schraubdeckel (41) und der Zwischendeckel (5) zweite miteinander in Eingriff bringbare, lösbare Verbindungsmittel (44, 54) zur Übertragung axialer Zugkräfte aufweisen,
- **daß** die zweiten Verbindungsmittel (44, 54) durch Verdrehen des Schraubdeckels (41) in seiner Losdrehrichtung (41') relativ zum Zwischendeckel (5) in Eingriff und durch Verdrehen des Schraubdeckels (41) in seiner Festdrehrichtung (41'') relativ zum Zwischendeckel (5) außer Eingriff bringbar sind und
- **daß** die Verbindung zwischen den ersten Verbindungsmitteln (23, 53) als Drehverbindung gestaltet ist, wobei die ersten Verbindungsmittel (23, 53) durch Verdrehen des Schraubdeckels (41) in dessen Losdrehrichtung (41') unter Mitnahme des Zwischendekkels (5) relativ zum Filtereinsatz (2) in Eingriff und durch Verdrehen des Zwischendeckels (5) in entgegengesetzter Richtung (41'') relativ zum Filtereinsatz (2) außer Eingriff bringbar sind.

7. Vorrichtung nach Anspruch 6, **dadurch gekennzeichnet, daß** der Drehwinkel, den der Schraubdeckel (41) relativ zum Filtereinsatz (2) zwischen der Nichteingriffsstellung und der Eingriffsstellung der ersten und der zweiten Verbindungsmittel (23, 53; 44, 54) zurücklegt, insgesamt zwischen etwa 45° und 120° betragt.

8. Vorrichtung nach einem der Ansprüche 5 bis 7, **dadurch gekennzeichnet, daß** der Zwischendeckel (5) Glockenform hat und auf seinem Außenumfang axial verlaufende Rippen (56) aufweist, die jeweils mit mindestens einer in Umfangsrichtung weisenden Verbreiterung (54) oder Durchbrechung ausgebildet sind, und daß der Schraubdeckel (41) an seinem unteren Rand in seiner Losdrehrichtung (41') weisende Haken (44) oder Nasen aufweist, die mit den Verbreiterungen (54) oder Durchbrechungen durch Verdrehen des Schraubdeckels (41) in seiner Losdrehrichtung (41') relativ zum Zwischendeckel (5) in Eingriff und durch Verdrehen des Schraubdeckels (41) in seiner Festdrehrichtung (41'') relativ zum Zwischendeckel (5) außer Eingriff bringbar sind.

9. Vorrichtung nach Anspruch 8, **dadurch gekennzeichnet, daß** die die Verbreiterungen (54) oder Durchbrechungen aufweisenden Rippen (56) zugleich als Stabilisierungs- und Kraftableitungsrippen zur Versteifung des Zwischendeckels (5) und zur Ableitung von durch einen Öldruck im Inneren des Gehäuses (4) unterhalb des Zwischendeckels (5) hervorgerufenen Kräften auf den Schraubdeckel (41) dienen.

10. Vorrichtung nach Anspruch 8 oder 9, **dadurch gekennzeichnet, daß** die Verbreiterungen (54) oder Durchbrechungen einerseits und/oder die Haken (44) oder Nasen andererseits an ihren in Eingriff miteinander tretenden Flächen jeweils mit einer die Eingriffsstellung sichernden Schräge oder Stufe (47, 57) ausgebildet sind.

11. Vorrichtung nach einem der Ansprüche 5 bis 7, **dadurch gekennzeichnet, daß** der Zwischendeckel (5) Glockenform hat und radial außen auf seiner Oberseite mehrere axial nach oben weisende, in Umfangsrichtung voneinander beabstandete Flügel (56') aufweist, die jeweils mit mindestens einer in Umfangsrichtung weisenden Verbreiterung oder Durchbrechung oder einer radial nach innen einspringenden Eintiefung als Verbindungsmittel (54) ausgebildet sind, und daß der Schraubdeckel (41) an seinem unteren Rand in seiner Losdrehrichtung (41') oder radial nach innen weisende Haken oder Nasen als Verbindungsmittel (44) aufweist, die mit den Verbindungsmitteln (54) des Zwischendekkels (5) durch Verdrehen des Schraubdeckels (41) in seiner Losdrehrichtung (41') relativ zum Zwischendekkel (5) in Eingriff und durch Verdrehen des Schraubdeckels (41) in seiner Festdrehrichtung (41'') relativ zum Zwischendeckel (5) außer Eingriff bringbar sind.

12. Vorrichtung nach Anspruch 11, **dadurch gekennzeichnet, daß** die zweiten Verbindungsmittel (44, 54) so angeordnet und ausgebildet sind, daß bei einem Aufsetzen des Schraubdeckels (41) auf den festen Gehäuseteil (42) vor deren Gewindeeingriff die zweiten Verbindungsmittel (44, 54) einander in Axialrichtung überlappen.

13. Vorrichtung nach Anspruch 11 oder 12, **dadurch gekennzeichnet, daß** die Flügel (56') radial außen eine mit Bewegungsspiel in das Innere des Schraubdeckels (41) passende Führungskontur (58) haben.

14. Vorrichtung nach einem der Ansprüche 11 bis 13, **dadurch gekennzeichnet, daß** an oder neben den Flügeln (56') je eine radial nach außen vorspringende Stufe (59) vorgesehen ist, auf denen im festgeschraubten Zustand des Schraubdeckels (41) dessen Unterkante (49) aufsteht.

15. Vorrichtung nach Anspruch 14, **dadurch gekennzeichnet, daß** ein Teil der Stufen (59) an seinem in Losdrehrichtung (41') des Schraubdeckels (41) weisenden Ende je eine nach oben vorragende Kante (59') aufweist.

16. Vorrichtung nach einem der Ansprüche 11 bis 15, **dadurch gekennzeichnet, daß** die Flügel (57) über einen durchgehenden, umlaufenden Kragen miteinander verbunden oder zu einem durchgehenden, umlaufenden Kragen zusammengefaßt sind.

17. Vorrichtung nach einem der Ansprüche 6 bis 16, **dadurch gekennzeichnet, daß** die filtereinsatzseitigen Verbindungsmittel (23) durch einen an einer oberen Stirnscheibe (22) des Filtereinsatzes (2) ohnehin vorhandenen konzentrischen Kranz von Schnapphaken (24) gebildet sind und daß die zugehörigen Verbindungsmittel (53) des Zwischendeckels (5) durch einen an der Unterseite von dessen oberem Teil (50) konzentrisch angeordneten Ring (53) mit Nockensegmenten gebildet sind, wobei in einer ersten, durch Verdrehen in Festdrehrichtung einstellbaren Verdrehstellung relativ zueinander der Kranz von Schnapphaken (24) axial in den Ring (53) und aus dem Ring (53) mit den Nockensegmenten bewegbar ist und wobei in einer zweiten, durch Verdrehen in Losdrehrichtung einstellbaren Verdrehstellung relativ zueinander der in den Ring (53) bewegte Kranz von Schnapphaken (24) axial nicht aus dem Ring (53) mit den Nockensegmenten heraus bewegbar ist.

18. Vorrichtung nach Anspruch 17, **dadurch gekennzeichnet, daß** der Ring (53) mit den Nockensegmenten als separates Bauteil verdrehfest und verliersicher in eine Ausnehmung (52) des Zwischendeckels (5) eingesetzt ist.

19. Vorrichtung nach einem der vorangehenden Ansprüche, **dadurch gekennzeichnet, daß** die als Drehverbindungsmittel gestalteten Verbindungsmittel (25, 45; 23, 53; 44, 54) bajonettverschlußartig oder als Kurzgewinde ausgeführt sind.

20. Vorrichtung nach einem der vorangehenden Ansprüche, **dadurch gekennzeichnet, daß** der Schraubdeckel (41), die obere Stirnscheibe (22) des Filtereinsatzes (2) sowie gegebenenfalls der Zwischendeckel (5) und gegebenenfalls der Ring (46, 53) mit den Nockensegmenten jeweils einstückige Spritzgußteile aus Kunststoff sind.

21. Vorrichtung nach Anspruch 3 oder 17, **dadurch gekennzeichnet, daß** der Schraubdeckel (41) einschließlich seines Rings (46) mit den Nockensegmenten oder der Zwischendeckel (5) einschließlich seines Rings (53) mit den Nockensegmenten jeweils ein einstückiges Spritzgußteil aus Kunststoff ist.

## Claims

1. A device (1) for separating impurities from the lubricating oil of an internal combustion engine, said device (1) comprising a filter element (2), wherein said filter element (2) is arranged in a two-piece housing (4) that is closed during operation of the device (1) and comprises a stationary lower housing part (42) and a removable upper screw cap (41) and wherein said screw cap (41) and said filter element (2) comprise detachable connection means (25, 45) which can be brought into engagement with each other and are used to transmit axial tractive forces, wherein the filter element (2) can be removed from the housing (4) by means of these connection means (25, 45) when the screw cap (41) is rotated in its loosening rotational direction,
**characterized in that**
the connection means (25, 45) are connection means (25, 45) that can be brought into engagement with each other by rotating the screw cap (41) in its loosening rotational direction (41') and can be brought out of engagement by rotating the screw cap (41) in its tightening rotational direction (41'').

2. A device according to Claim 1, **characterized in that** the angle of rotation covered by the screw cap (41) between the disengaged position and the engaged position of the connection means (25, 45) ranges from approximately 15 degrees to 30 degrees.

3. A device according to Claim 1 or 2, **characterized in that** the connection means (25) on the side of the filter element are formed by a concentric circle of snap-on hooks (24) that is anyway present at an upper end disk (22) of the filter element (2) and that the associated connection means (45) of the screw cap (41) are formed by a ring (46) with cam segments that is concentrically arranged at the bottom side of the upper part of said screw cap (41), wherein, in a first rotational position that can be adjusted by rotating the screw cap (41) in its tightening rotational direction (41''), the circle of snap-on hooks (24) can be moved in axial direction into the ring (46) and out of the ring (46) with the cam segments in relation to each other and wherein, in a second rotational position that can be adjusted by rotating the screw cap (41) in its loosening rotational direction (41'), the circle of snap-on hooks (24) that has been moved into the ring (46) cannot be moved out of the ring (46) with the cam segments in axial direction in relation to each other.

4. A device according to Claim 3, **characterized in that** the ring (46) with the cam segments is inserted in a recess (48) of the screw cap (41) as a separate component such that it can neither be rotated nor lost.

5. A device (1) for separating impurities from the lubricating oil of an internal combustion engine, wherein the device (1) comprises a filter element (2) at its bottom and, on top of said filter element (2), a centrifuge (3) with a rotor (31) drivable by means of lubricating oil flowing therethrough, wherein said filter element (2) and said centrifuge (3) are arranged, one above the other, in a common two-piece housing (4) that is closed during operation of the device (1) and comprises a removable upper screw cap (41) and a stationary lower housing part (42), wherein a removable intermediate cap (5) is arranged in the housing (4) between said filter element (2) and said centrifuge (3), said intermediate cap (5) and said filter element (2) comprising first detachable connection means (23, 53) which can be brought into engagement with each other and are used to transmit axial tractive forces, and wherein said centrifuge (3), said intermediate cap (5) and said filter element (2) can be removed from the housing (4) while the latter is in its open state,
**characterized in that**
- the screw cap (41) and the intermediate cap (5) additionally comprise second detachable connection means (44, 54) that can be brought into engagement with each other and are used to transmit axial tractive forces,
- the second connection means (44, 54) can be brought into engagement with each other by rotating the screw cap (41) in its loosening rotational direction (41') in relation to the intermediate cap (5) and can be brought out of engagement by rotating the screw cap (41) in its tightening rotational direction (41'') in relation to the intermediate cap (5), and
- the connection between the first connection means (23, 53) is formed as locking connection, wherein the connection means (23) on the side of the filter element (2) are formed by a circle of locking hooks (24) with locking noses (26).

6. A device (1) for separating impurities from the lubricating oil of an internal combustion engine, wherein the device (1) comprises a filter element (2) at its bottom and, on top of said filter element (2), a centrifuge (3) with a rotor (31) drivable by means of lubricating oil flowing therethrough, wherein said filter element (2) and said centrifuge (3) are arranged, one above the other, in a common two-piece housing (4) that is closed during operation of the device (1) and comprises a removable upper screw cap (41) and a stationary lower housing part (42), wherein a removable intermediate cap (5) is arranged in the housing (4) between said filter element (2) and said centrifuge (3), said intermediate cap (5) and said filter element (2) comprising first detachable connection means (23, 53) which can be brought into engagement with each other and are used to transmit axial tractive forces, and wherein said centrifuge (3), said intermediate cap (5) and said filter element (2) can be removed from the housing (4) while the latter is in its open state,
**characterized in that**
- the screw cap (41) and the intermediate cap (5) additionally comprise second detachable connection means (44, 54) that can be brought into engagement with each other and are used to transmit axial tractive forces,
- the second connection means (44, 54) can be brought into engagement by rotating the screw cap (41) in its loosening rotational direction (41') in relation to the intermediate cap (5) and can be brought out of engagement by rotating the screw cap (41) in its tightening rotational direction (41'') in relation to the intermediate cap (5), and
- the connection between the first connection means (23, 53) is formed as rotary connection, wherein the first connection means (23, 53) can be brought into engagement by rotating the screw cap (41) in its loosening rotational direction (41') in relation to the filter element (2) while taking along the intermediate cap (5) and can be brought out of engagement by rotating the intermediate cap (5) in opposite direction (41'') in relation to the filter element (2).

7. A device according to Claim 6, **characterized in that** the angle of rotation covered by the screw cap (41) between the disengaged position and the engaged position of the first and second connection means (23, 53; 44, 54) in relation to the filter element (2) is, altogether, ranging from approximately 45 degrees to 120 degrees.

8. A device according to anyone of Claims 5 through 7, **characterized in that** the intermediate cap (5) has the shape of a bell and comprises at its outer perimeter axially extending fins (56) each of which is provided with at least one broadening (54) or aperture pointing in circumferential direction and that the screw cap (41) comprises at its lower edge hooks (44) or noses that are pointing in its loosening rotational direction (41') and can be brought into engagement with the broadenings (54) or apertures by rotating the screw cap (41) in its loosening rotational direction (41') in relation to the intermediate cap (5) and can be brought out of engagement by rotating the screw cap (41) in its tightening rotational direction (41'') in relation to the intermediate cap (5).

9. A device according to Claim 8, **characterized in that** the fins (56) that comprise the broadenings (54) or apertures are, at the same time, used as stabilization and force diverting fins for reinforcing the intermediate cap (5) and for diverting onto the screw cap (41) such forces that are caused by an oil pressure below the intermediate cap (5) in the interior region of the housing (4).

10. A device according to Claim 8 or 9, **characterized in that** the broadenings (54) or apertures on the one hand and/or the hooks (44) or noses on the other hand are each provided with a slope or step (47, 57) at their surfaces that are brought into engagement with each other, said slope or step (47, 57) securing the engaged position.

11. A device according to anyone of Claims 5 through 7, **characterized in that** the intermediate cap (5) has the shape of a bell and comprises, in a radially outer region of its upper side, a plurality of wings (56') that are pointing in an axially upward direction, are spaced apart from each other in circumferential direction and are each provided with at least one broadening or aperture pointing in circumferential direction or with a depression used as connection means (54) and recessing in a radially inward direction and that the screw cap (41) comprises at its lower edge hooks or noses as connection means (44) that are pointing in the loosening rotational direction (41') of the screw cap (41) or in a radially inward direction, wherein said connection means (44) can be brought into engagement with the connection means (54) of the intermediate cap (5) by rotating the screw cap (41) in its loosening rotational direction (41') in relation to the intermediate cap (5) and can be brought out of engagement by rotating the screw cap (41) in its tightening rotational direction (41'') in relation to the intermediate cap (5).

12. A device according to Claim 11, **characterized in that** the second connection means (44, 54) are arranged and designed such that, before their thread engagement, the second connection means (44, 54) overlap each other in axial direction when the screw cap (41) is placed onto the stationary housing part (42).

13. A device according to Claim 11 or 12, **characterized in that** the wings (56') comprise, at their radially outer end, a guide contour (58) fitting in the interior region of the screw cap (41) with motional play.

14. A device according to anyone of Claims 11 through 13, **characterized in that** a step (59) is provided at or next to each of the wings (56'), said step (59) projecting in a radially outward direction and forming the basis on which the lower edge (49) of the screw cap (41) is supported when the latter is in its tightened state.

15. A device according to Claim 14, **characterized in that** a part of the steps (59) at that end of the screw cap (41) that is pointing in the loosening rotational direction (41') thereof each comprises an edge (59') projecting in upward direction.

16. A device according to anyone of Claims 11 through 15, **characterized in that** the wings (57) are connected to each other via a continuous circumferential collar or are joined to form a continuous circumferential collar.

17. A device according to anyone of Claims 6 through 16, **characterized in that** the connection means (23) on the side of the filter element are formed by a concentric circle of snap-on hooks (24) that is anyway present at an upper end disk (22) of the filter element (2) and that the associated connection means (53) of the intermediate cap (5) are formed by a ring (53) with cam segments that is concentrically arranged at the bottom side of the upper part (50) of said intermediate cap (5), wherein, in a first rotational position that can be adjusted by rotating in tightening rotational direction, the circle of snap-on hooks (24) can be moved in axial direction into the ring (53) and out of the ring (53) with the cam segments in relation to each other and wherein, in a second rotational position that can be adjusted by rotating in loosening rotational direction, the circle of snap-on hooks (24) that has been moved into the ring (53) cannot be moved out of the ring (53) with the cam segments in axial direction in relation to each other.

18. A device according to Claim 17, **characterized in that** the ring (53) with the cam segments is inserted in a recess (52) of the intermediate cap (5) as a separate component such that it can neither be rotated nor lost.

19. A device according to anyone of the preceding claims, **characterized in that** the connection means (25, 45; 23, 53; 44, 54) that are provided as rotary connection means are designed in the form of a bayonet lock or as a short-length thread.

20. A device according to anyone of the preceding claims, **characterized in that** the screw cap (41), the upper end disk (22) of the filter element (2) as well as the intermediate cap (5) if necessary and, if need be, the ring (46, 53) with the cam segments are each single-piece injection-molded parts of plastic.

21. A device according to Claim 3 or 17, **characterized in that** the screw cap (41) including its ring (46) with the cam segments or the intermediate cap (5) including its ring (53) with the cam segments is each a single-piece injection-molded part of plastic.

## Revendications

1. Dispositif (1) pour séparer des impuretés contenues dans l'huile lubrifiante d'un moteur à combustion interne, le dispositif (1) comportant un insert filtrant (2), l'insert filtrant (2) étant situé dans un boîtier (4) en deux parties, fermé pendant le fonctionnement du dispositif (1) et comportant une partie de boîtier (42) inférieure fixe et un couvercle à visser (41) supérieur amovible, et le couvercle à visser (41) et l'insert filtrant (2) comportant des moyens d'assemblage (25, 45) pour la transmission de forces de traction axiales, lesquels sont détachables et qu'il est possible de faire s'engager l'un dans l'autre, l'insert filtrant (2) pouvant, au moyen de ces moyens d'assemblage (25, 45), lors d'un dévissage du couvercle à visser (41), être entraîné hors du boîtier (4),
**caractérisé en ce que**
les moyens d'assemblage (25, 45) sont des moyens d'assemblage (25, 45) qu'il est possible de faire s'engager l'un dans l'autre par rotation du couvercle à visser (41) dans sons sens de dévissage (41') et de faire se désengager par rotation du couvercle (41) dans son sens de vissage (41'').

2. Procédé selon la revendication 1, **caractérisé en ce que** l'angle de rotation que parcourt le couvercle à visser (41) entre la position désengagée et la position engagée des moyens d'assemblage (25, 45) est compris entre environ 15° et 30°.

3. Dispositif selon la revendication 1 ou 2, **caractérisé en ce que** les moyens d'assemblage (25) côté insert filtrant sont constitués par une couronne de mousquetons (24) concentrique, de toute manière présente sur un disque frontal supérieur (22) de l'insert filtrant (2), et **en ce que** les moyens d'assemblage associés (45) du couvercle à visser (41) sont constitués par un anneau (46) avec des segments de came, disposé concentriquement sur la face inférieure de la partie supérieure de celui-ci, la couronne de mousquetons (24) pouvant être déplacée axialement pour rentrer dans l'anneau (46) et sortir de l'anneau (46) avec les segments de came dans une première position de rotation réglable par rotation du couvercle à visser (41) dans son sens de vissage (41'') l'un relativement à l'autre et la couronne de mousquetons (24) déplacée pour rentrer dans l'anneau (46) ne pouvant pas être déplacée axialement hors de l'anneau (46) avec les segments de came dans une deuxième position de rotation réglable par rotation du couvercle à visser (41) dans le sens de dévissage (41') l'un relativement à l'autre.

4. Dispositif selon la revendication 3, **caractérisé en ce que** l'anneau (46) avec les segments de came est placé en tant que composant séparé, de manière résistante à la rotation et imperdable, dans un creux (48) du couvercle à visser (41).

5. Dispositif (1) pour séparer des impuretés contenues dans l'huile lubrifiante d'un moteur à combustion interne, le dispositif (1) comportant un insert filtrant (2) dans le bas et, au-dessus, une centrifugeuse (3) avec un rotor (31) entraînable au moyen d'huile lubrifiante de passage, l'insert filtrant (2) et la centrifugeuse (3) étant situés l'un au-dessus de l'autre dans un boîtier commun (4) en deux parties, fermé pendant le fonctionnement du dispositif (1) et comportant un couvercle à visser supérieur amovible (41) et une partie de boîtier inférieure fixe (42), un couvercle intermédiaire (5) retirable étant situé dans le boîtier (4) entre l'insert filtrant (2) et la centrifugeuse (3), le couvercle intermédiaire (5) et l'insert filtrant (2) comportant des premiers moyens d'assemblage (23, 53) pour la transmission de forces de traction axiales, lesquels sont détachables et qu'il est possible de faire s'engager l'un dans l'autre, et la centrifugeuse (3), le couvercle intermédiaire (5) et l'insert filtrant (2) pouvant être retirés du boîtier dans l'état ouvert de celui-ci,
**caractérisé en ce que**
- additionnellement, le couvercle à visser (41) et le couvercle intermédiaire (5) comportent des deuxièmes moyens d'assemblage (44, 54) pour la transmission de forces de traction axiale, lesquels sont détachables et qu'il est possible de faire s'engager l'un dans l'autre,
- il est possible de faire s'engager les deuxièmes moyens d'assemblage (44, 54) par rotation du couvercle à visser (41) dans son sens de dévissage (41') relativement au couvercle intermédiaire (5) et de les faire se désengager par rotation du couvercle (41) dans son sens de vissage (41'') relativement au couvercle intermédiaire (5) et
- l'assemblage entre les premiers moyens d'assemblage (23, 53) est conformé en tant qu'assemblage par encliquetage, les moyens d'assemblage (23) étant constitués, du côté de l'insert filtrant (2), par une couronne de mousquetons (24) avec des crans (26).

6. Dispositif (1) pour séparer des impuretés contenues dans l'huile lubrifiante d'un moteur à combustion interne, le dispositif (1) comportant un insert filtrant (2) dans le bas et, au-dessus, une centrifugeuse (3) avec un rotor (31) entraînable au moyen d'huile lubrifiante de passage, l'insert filtrant (2) et la centrifugeuse (3) étant situés l'un au-dessus de l'autre dans un boîtier commun (4) en deux parties, fermé pendant le fonctionnement du dispositif (1) et comportant un couvercle à visser supérieur amovible (41) et une partie de boîtier inférieure fixe (42), un couvercle intermédiaire (5) retirable étant situé dans le boîtier (4) entre l'insert filtrant (2) et la centrifugeuse (3), le couvercle intermédiaire (5) et l'insert filtrant (2) comportant des premiers moyens d'assemblage (23, 53) pour la transmission de forces de traction axiales, lesquels sont détachables et qu'il est possible de faire s'engager l'un dans l'autre et la centrifugeuse (3), le couvercle intermédiaire (5) et l'insert filtrant (2) pouvant être retirés du boîtier dans l'état ouvert de celui-ci,
**caractérisé en ce que**
- additionnellement, le couvercle à visser (41) et le couvercle intermédiaire (5) comportent des deuxièmes moyens d'assemblage (44, 54) pour la transmission de forces de traction axiale, lesquels sont détachables et qu'il est possible de faire s'engager l'un dans l'autre,
- il est possible de faire s'engager les deuxièmes moyens d'assemblage (44, 54) par rotation du couvercle à visser (41) dans son sens de dévissage (41') relativement au couvercle intermédiaire (5) et de les faire se désengager par rotation du couvercle (41) dans son sens de vissage (41'') relativement au couvercle intermédiaire (5) et
- l'assemblage entre les premiers moyens d'assemblage (23, 53) est conformé en tant qu'assemblage par rotation, tout en étant qu'il est possible de faire s'engager les premiers moyens d'assemblage (23, 53) par rotation du couvercle à visser (41) dans son sens de dévissage (41') avec entraînement du couvercle intermédiaire (5) relativement à l'insert filtrant (2) et de les faire se désengager par rotation du couvercle intermédiaire (5) dans le sens inverse (41'') relativement à l'insert filtrant (2).

7. Dispositif selon la revendication 6, **caractérisé en ce que** l'angle de rotation que parcourt le couvercle à visser (41) relativement à l'insert filtrant (2) entre la position désengagée et la position engagée des premiers et deuxièmes moyens d'assemblage (23, 53; 44, 54) est compris globalement entre environ 45° et 120°.

8. Dispositif selon l'une des revendications 5 à 7, **caractérisé en ce que** le couvercle intermédiaire (5) a la forme d'une cloche et comporte, sur son pourtour extérieur, des nervures axiales (56) qui sont respectivement conformées avec au moins un élargissement (54) ou ouverture orientés dans le sens du pourtour et **en ce que** le couvercle à visser (41) comporte, sur son bord inférieur, des crochets (44) ou ergots orientés dans son sens de dévissage (41'), qu'il est possible de faire s'engager dans les élargissements (54) ou ouvertures par rotation du couvercle à visser (41) dans son sens de dévissage (41') relativement au couvercle intermédiaire (5) et de faire se désengager par rotation du couvercle à visser (41) dans son sens de vissage (41'') relativement au couvercle intermédiaire (5).

9. Dispositif selon la revendication 8, **caractérisé en ce que** les nervures (56) présentant les élargissements (54) ou ouvertures servent en même temps de nervures de stabilisation et de dérivation de force pour renforcer le couvercle intermédiaire (5) et pour dériver sur le couvercles à visser (41) des forces dues à une pression d'huile à l'intérieur du boîtier (4) en dessous du couvercle intermédiaire (5).

10. Dispositif selon la revendication 8 ou 9, **caractérisé en ce que** les élargissements (54) ou ouvertures, d'une part, et/ou les crochets (44) ou ergots, d'autre part, sont conformés, en leurs faces qui s'engagent les unes dans les autres, respectivement avec un biseau ou une marche (47, 57) assurant la position engagée.

11. Dispositif selon l'une des revendications 5 à 7, **caractérisé en ce que** le couvercle intermédiaire (5) a la forme d'une cloche et comporte, radialement extérieurement, sur sa face supérieure, plusieurs ailes (56') tournées axialement vers le haut et distantes l'une de l'autre dans le sens du pourtour, lesquelles sont conformées respectivement avec au moins un élargissement ou une ouverture tournés dans le sens du pourtour ou un creux rentrant radialement vers l'intérieur en tant que moyen d'assemblage (54) et **en ce que** le couvercle à visser (41) comporte, sur son bord inférieur, des crochets ou ergots en tant que moyens d'assemblage (44) tournés dans son sens de dévissage (41') ou radialement vers l'intérieur, qu'il est possible de faire s'engager dans les moyens d'assemblage (54) du couvercle intermédiaire (5) par rotation du couvercle à visser (41) dans son sens de dévissage (41') relativement au couvercle intermédiaire (5) et de faire se désengager par rotation du couvercle à visser (41) dans son sens de vissage (41'') relativement au couvercle intermédiaire (5).

12. Dispositif selon la revendication 11, **caractérisé en ce que** les deuxièmes moyens d'assemblage (44, 54) sont disposés et conformés de manière telle que, lors d'une pose du couvercle à visser (41) sur la partie de boîtier fixe (42), avant leur engagement par vissage, les deuxièmes moyens d'assemblage (44, 54), se chevauchent dans le sens axial.

13. Dispositif selon la revendication 11 ou 12, **caractérisé en ce que** les ailes (56') ont, radialement extérieurement, un contour de guidage (58) qui est à la mesure de l'intérieur du couvercle à visser (41) avec jeu de mouvement.

14. Dispositif selon l'une des revendications 11 à 13, **caractérisé en ce qu'**est respectivement prévu, sur ou à côté des ailes (56'), respectivement une marche (59) faisant saillie radialement vers l'extérieur, sur lesquels se dresse, à l'état vissé du couvercle à visser (41), le bord inférieur de celui-ci.

15. Dispositif selon la revendication 14, **caractérisé en ce qu'**une partie des marches (59) comporte, en son extrémité tournée dans le sens du dévissage (41') du couvercle à visser (41), respectivement une arête (59') en saillie vers le haut.

16. Dispositif selon l'une des revendications 11 à 15, **caractérisé en ce que** les ailes (57) sont reliées entre elles par l'intermédiaire d'un rebord périphérique continu ou réunies pour constituer un rebord périphérique continu.

17. Dispositif selon l'une des revendications 6 à 16, **caractérisé en ce que** les moyens d'assemblage (23) côté insert filtrant sont constitués par une couronne de mousquetons (24) concentrique, de toute manière présente sur un disque frontal supérieur (22) de l'insert filtrant (2), et **en ce que** les moyens d'assemblage associés (53) du couvercle intermédiaire (5) sont constitués par un anneau (53) avec des segments de came, disposé concentriquement sur la face inférieure de la partie supérieure (50) de celui-ci, la couronne de mousquetons (24) pouvant être déplacée axialement pour rentrer dans l'anneau (53) et sortir de l'anneau (53) avec les segments de came dans une première position de rotation réglable par rotation dans le sens de vissage l'un relativement à l'autre et la couronne de mousquetons (24) déplacée pour rentrer dans l'anneau (53) ne pouvant pas être déplacée axialement hors de l'anneau (53) avec les segments de came dans une deuxième position de rotation réglable par rotation dans le sens de dévissage l'un relativement à l'autre.

18. Dispositif selon la revendication 17, **caractérisé en ce que** l'anneau (53) avec les segments de came est placé en tant que composant séparé, de manière résistante à la rotation et imperdable, dans un creux (52) du couvercle intermédiaire (5).

19. Dispositif selon l'une des revendications précédentes, **caractérisé en ce que** la réalisation des moyens d'assemblage (25, 45; 23, 53; 44, 54) réalisés en tant que moyens d'assemblage par rotation est de type emboîtement à baïonnette ou filet court.

20. Dispositif selon l'une des revendications précédentes, **caractérisé en ce que** le couvercle à visser (41), le disque frontal supérieur (22) de l'insert filtrant (2) ainsi que, le cas échéant, le couvercle intermédiaire (5) et, le cas échéant, l'anneau (46, 53) avec les segments de came sont respectivement des pièces monoblocs en matière plastique moulées par injection.

21. Dispositif selon la revendication 3 ou 17, **caractérisé en ce que** le couvercle à visser (41), y compris son anneau (46) avec les segments de came, ou le couvercle intermédiaire (5), y compris son anneau (53) avec les segments de came, sont respectivement une pièce monobloc en matière plastique moulée par injection.
